# EUROPEAN PATENT APPLICATION

(11) **EP 4 539 412 A1**
(43) Date of publication of application: **16.04.2025**
(21) Application number: 24202094.9
(22) Date of filing: 24.09.2024
(51) Int. Cl.: H04L 27/26

(54) **SYSTEMS AND METHODS FOR ENHANCED LONG-RANGE UHR PACKET FORMATS**

(30) Priority: 12.10.2023 US 202363589842 P; 20.10.2023 US 202363591793 P; 09.01.2024 US 202463619070 P; 30.04.2024 US 202418651350
(71) Applicant: Avago Technologies International Sales Pte. Limited, Singapore 768923 (SG)
(72) Inventor: Nassiri Toussi, Karim, Irvine, 92618 (US); Puducheri Sundarav Aradhan, Srinath, Irvine, 92618 (US); Porat, Ron, Irvine, 92618 (US); Zhuang, Qian, Irvine, 92618 (US)
(74) Representative: Bosch Jehle Patentanwaltsgesellschaft mbH

(57) **Abstract**

The technical solution is directed to ultra-high reliability (UHR) extended long-range (ELR) packet formats for enhanced long-range communications and applications. A sender can identify data to be transmitted wirelessly to a receiver according to UHR-ELR format. The sender can generate a preamble for a PPDU frame of the UHR-ELR format. The preamble can include slots for a legacy portion and for the UHR-ELR portion. The sender can include an ELR symbol in a slot the legacy portion to auto-detect that the PPDU frame is for UHR-ELR. The sender can identify a power boost for transmitting at least a L-STF or a L-LTF and transmit the PPDU frame providing the power boost to the L-STF or the L-LTF.

## Description

The present application claims the benefit of and priority to U.S. provisional Patent Application No. 63/589,842 filed on October 12, 2023, U.S. provisional Patent Application No. 63/591,793 filed on October 20, 2023, and U.S. provisional Patent Application No. 63/619,070 filed on January 09, 2024, the disclosures of which is incorporated herein by reference in their entirety.

This disclosure generally relates to systems and methods for packet formats for enhanced long-range communications, and in particular preambles of such packet formats.

The technical solutions of the present disclosure are directed to systems and method of providing ultra-high reliability (UHR) extended long-range (ELR) network packet transmissions for enhanced long-range communications. When transmitting data over long distances and in applications in which transmitted signal face low signal to noise ratios, signal detection and reliability can be a challenge. In such situations, receiving devices can find it difficult to reliably detect and decode the incoming signal. The technical solutions of the present disclosure can overcome these challenges by introducing UHR-ELR packet formats along with power boosts for certain preamble symbols to help reduce the link budget asymmetry between downlink (DL) and uplink (UL), by about 6 dB. In doing so, the technical solutions provide a more robust preamble and payload processing for wireless communications such as for any implementations of 802.11 standards (e.g., 802.11bn).

At least one object of the technical solutions is directed to a method. The method can include identifying, by a sender, data to be transmitted wirelessly to a receiver according to an ultra-high reliability enhanced long-range (UHR-ELR) format. The method can include the sender generating a preamble for a physical layer protocol data unit (PPDU) frame of the UHR-ELR format. The preamble can include a first plurality of slots for a legacy portion of the preamble and a second plurality of slots for the UHR-ELR portion of the preamble.

The method can include the sender including one or more ELR symbols in one or more slots of the legacy portion of the preamble. The one or more ELR symbols can be used by the receiver to auto-detect that the PPDU frame is in accordance with the UHR-ELR format and that the UHR-ELR portion of preamble and UHR-ELR payload is to follow the one or more ELR symbols of the legacy portion. The method can include identifying, by the sender, a power boost to provide during transmission of at least one of a legacy-short term training field (L-STF) or a legacy-long term training field (L-LTF) of the legacy portion of the preamble. The method can include transmitting, by the sender, the PPDU frame with the data to the receiver, the sender providing the power boost to the at least one of the L-STF or the L-LTF of the legacy portion of the preamble during transmission.

The receiver can be configured to detect using the one or more ELR symbols of the preamble that the PPDU frame contains in accordance with the UHR-ELR format. The one or more ELR symbols can include one or more symbols known by the sender and the receiver to indicate that the PPDU is in accordance with the UHR-ELR format. The one of the one or more ELR symbols can include a symbol that is same as a symbol in the L-LTF. The one or more ELR symbols can include a symbol that is same as a symbol in at least one of a universal signal field one (USIG1) or a universal signal field two (USIG2) of the legacy portion of the preamble. The frequency-domain contents of the PPDU frame can be 90 degree rotated, or rotated by an arbitrary phase, with respect to the rest of PPDU in at least one of the first plurality of slots or the second plurality of slots to reduce false detection.

The power boost can allow the receiver to detect the packet in noisy (low SNR) setting and subsequently search for one or more ELR symbols at a predetermined time after receiving of the at least one of the L-STF or the L-LTF by the receiver. In one embodiment, the power boost is configured to indicate to the receiver the existence one or more ELR symbols at the predetermined time after receiving of the at least one of the L-STF or the L-LTF that can be detected again for added reliability. The UHR-ELR portion of the preamble can include a synchronization symbol to facilitate synchronization between the sender and receiver. The UHR-ELR portion of the preamble can include redundant information for receiver to use for at least one of demodulation or error correction of the PPDU frame. The power boost applied to the L-STF and L-LTF of the legacy portion of the preamble can be adjusted based on channel conditions to improve reception at the receiver. The one or more ELR symbols can be configured to convey to the receiver control information. The control information indicative of at least one of a modulation parameter or a transmission mode.

One aspect of the technical solutions is directed to a system. The system can include a sender device. The sender device can be configured to identify data to be transmitted wirelessly to a receiver device via a physical layer protocol data unit (PPDU) frame of an ultra-high reliability enhanced long-range (UHR-ELR) format. The sender device can be configured to generate a preamble of the PPDU frame. The preamble can be configured to include at least one of a legacy short term training field (L-STF) or a legacy long term training field (L-LTF). The sender device can be configured to insert one or more ELR symbols into one or more slots of the preamble between the at least one of the L-STF or the L-LTF and a payload portion of the PPDU frame configured to include the data. The sender device can be configured to transmit, to the receiver device, the PPDU frame using a power boost to transmit the at least one of the L-STF or the L-LTF of the preamble of the PPDU frame.

The sender device can be configured to include one or more ELR symbols in one or more slots of at least one of the legacy portion of the preamble. The one or more ELR symbols can be used by the receiver to auto-detect that the PPDU frame is in accordance with the UHR-ELR format. The sender device can be configured to identify a power boost to provide during transmission of at least one of a legacy-short term training field (L-STF) or a legacy-long term training field (L-LTF) of the legacy portion of the preamble. The sender device can be configured to transmit the PPDU frame with the data to the receiver. The sender device can be configured to provide the power boost to the at least one of the L-STF or the L-LTF of the legacy portion of the preamble during transmission.

One aspect of the technical solution is directed to a device. The device can be configured to identify data to be transmitted wirelessly to a receiver device via a physical layer protocol data unit (PPDU) frame of an ultra-high reliability enhanced long-range (UHR-ELR) format. The device can be configured to generate a preamble of the PPDU frame. The preamble can be configured to include at least one of a legacy short term training field (L-STF) or a legacy long term training field (L-LTF). The device can be configured to insert one or more ELR symbols into one or more slots of the preamble between the at least one of the L-STF or the L-LTF and a payload portion of the PPDU frame configured to include the data. The device can be configured to transmit to the receiver device. The PPDU frame can use a power boost to transmit the at least one of the L-STF or the L-LTF of the preamble of the PPDU frame.

According to an aspect, a method is provided, comprising:
identifying, by a sender, data to be transmitted wirelessly to a receiver according to an ultra-high reliability enhanced long-range (UHR-ELR) format;
generating, by the sender, a preamble for a physical layer protocol data unit (PPDU) frame of the UHR-ELR format, the preamble comprising a first plurality of slots for a legacy portion of the preamble and a second plurality of slots for the UHR-ELR portion of the preamble;
including, by the sender, one or more ELR symbols in one or more slots of the legacy portion of the preamble, the one or more ELR symbols used by a receiver to auto-detect that the PPDU frame is in accordance with the UHR-ELR format;
identifying, by the sender, a power boost to provide during transmission of at least one of a legacy-short term training field (L-STF) or a legacy-long term training field (L-LTF) of the legacy portion of the preamble; and
transmitting, by the sender, the PPDU frame with the data to the receiver, the sender providing the power boost to the at least one of the L-STF or the L-LTF of the legacy portion of the preamble during transmission.

Advantageously, the receiver is further configured to detect using the one or more ELR symbols of the preamble that the PPDU frame is in accordance with the UHR-ELR format.

Advantageously, the one of the one or more ELR symbols comprises one or more symbols known by the sender and the receiver to indicate that the PPDU frame is in accordance with the UHR-ELR format.

Advantageously, the one of the one or more ELR symbols includes a symbol that is same as a symbol in the L-LTF.

Advantageously, the one of the one or more ELR symbols includes a symbol that is same as a symbol in at least one of a universal signal field one (USIG1) or a universal signal field two (USIG2) of the legacy portion of the preamble.

Advantageously, the data of the PPDU frame is 90 degree, or an arbitrary phase, rotated with respect to a symbol in at least one of the first plurality of slots or the second plurality of slots to reduce false detection.

Advantageously, the power boost is configured to indicate to the receiver to detect the one or more ELR symbols at a predetermined time after receiving of the at least one of the L-STF or the L-LTF by the receiver.

Advantageously, the ELR symbol is located within a slot of the first plurality of slots of the legacy portion, the slot corresponding to a time interval from a first slot of the second plurality of slots of the UHR-ELR portion of the preamble, and wherein the receiver is configured to detect the UHR-ELR portion at the time interval following the detection of the ELR symbol.

Advantageously, one or more ELR symbols are inserted in the at least one or more slots of the legacy portion of the preamble following one of a first set of symbols comprising: L-STF, L-LTF, LSIG, RLSIG, USIG1 and USIG2 or a second set of symbols comprising: L-STF, L-LTF, LSIG and RLSIG.

Advantageously, the power boost applied to the L-STF and L-LTF of the legacy portion of the preamble is adjusted based on channel conditions to improve reception at the receiver.

Advantageously, the one or more ELR symbols are configured to convey to the receiver control information, the control information indicative of at least one of a modulation parameter or a transmission mode.

According to an aspect, a system is provided, comprising:
a sender device configured to:
   identify data to be transmitted wirelessly to a receiver device via a physical layer protocol data unit (PPDU) frame of an ultra-high reliability enhanced long-range (UHR-ELR) format;
   generate a preamble of the PPDU frame, the preamble configured to include at least one of a legacy short term training field (L-STF) or a legacy long term training field (L-LTF);
   insert one or more ELR symbols into one or more slots of the preamble between the at least one of the L-STF or the L-LTF and a payload portion of the PPDU frame configured to include the data; and
   transmit, to the receiver device, the PPDU frame using a power boost to transmit the at least one of the L-STF or the L-LTF of the preamble of the PPDU frame.

Advantageously, the receiver device is further configured to detect using the one or more ELR symbols of the preamble that the PPDU frame is in accordance with the UHR-ELR format.

Advantageously, the one or more ELR symbols comprises one or more symbols known by the sender device and the receiver device to indicate that the PPDU frame is in accordance with the UHR-ELR format.

Advantageously, the one of the one or more ELR symbols includes a symbol that is same as at least one of a symbol in the L-LTF, a symbol in a universal signal field one (USIG1) or a symbol in a universal signal field two (USIG2) of the preamble.

Advantageously, the data of the PPDU frame is 90 degree, or an arbitrary phase, rotated with respect to a symbol in at least one of a plurality of slots of the preamble to reduce false detection by the receiver device.

Advantageously, the power boost is configured to indicate to the receiver to detect the one or more ELR symbols at a predetermined time after a receipt of the at least one of the L-STF or the L-LTF by the receiver.

Advantageously, the receiver device is configured to determine a time at which a first slot of the second plurality of slots for the UHR-ELR portion of the preamble is to arrive at the receiver in response to detecting an ELR symbol within a slot of the first plurality of slots of the legacy portion being received by the receiver device.

Advantageously, the power boost applied to the L-STF and L-LTF of the legacy portion of the preamble is adjusted based on channel conditions.

According to an aspect, a device is provided comprising:
one or more processors, coupled to memory and configured to:
identify data to be transmitted wirelessly to a receiver according to an ultra-high reliability enhanced long-range (UHR-ELR) format;
generate a preamble for a physical layer protocol data unit (PPDU) frame of the UHR-ELR format, the preamble comprising a first plurality of slots for a legacy portion of the preamble and a second plurality of slots for the UHR-ELR portion of the preamble;
provide one or more ELR symbols in a selected one or more slots of the first plurality of slots or the second plurality slots, the one or more ELR symbols used by a receiver to auto-detect that the PPDU frame is in accordance with the UHR-ELR format;
identify a power boost to provide during transmission of at least one of a legacy-short term training field (L-STF) or a legacy-long term training field (L-LTF) of the legacy portion of the preamble; and
transmit the PPDU frame with the data to the receiver, the sender providing the power boost to the at least one of the L-STF or the L-LTF of the legacy portion of the preamble during transmission.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a diagram depicting an example communication environment with communication systems.
FIG. 2 is an example schematic block diagram of a computing system.
FIGs. 3-12 are example diagrams of packet formats.
FIGs. 13-18 are example diagrams of simulation results.
FIG. 19 is an example flow diagram of a method for communicating network packets of UHR-ELR communications.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are merely examples and are not intended to be limiting. For example, a first feature in communication with or communicatively coupled to a second feature in the description that follows can include embodiments in which the first feature is in direct communication with or directly coupled to the second feature and can also include embodiments in which additional features can intervene between the first and second features, such that the first feature is in indirect communication with or indirectly coupled to the second feature. In addition, the present disclosure can repeat reference numerals and/or letters in the various examples. This repetition is for the purpose of simplicity and clarity and does not in itself dictate a relationship between the various embodiments and/or configurations discussed.

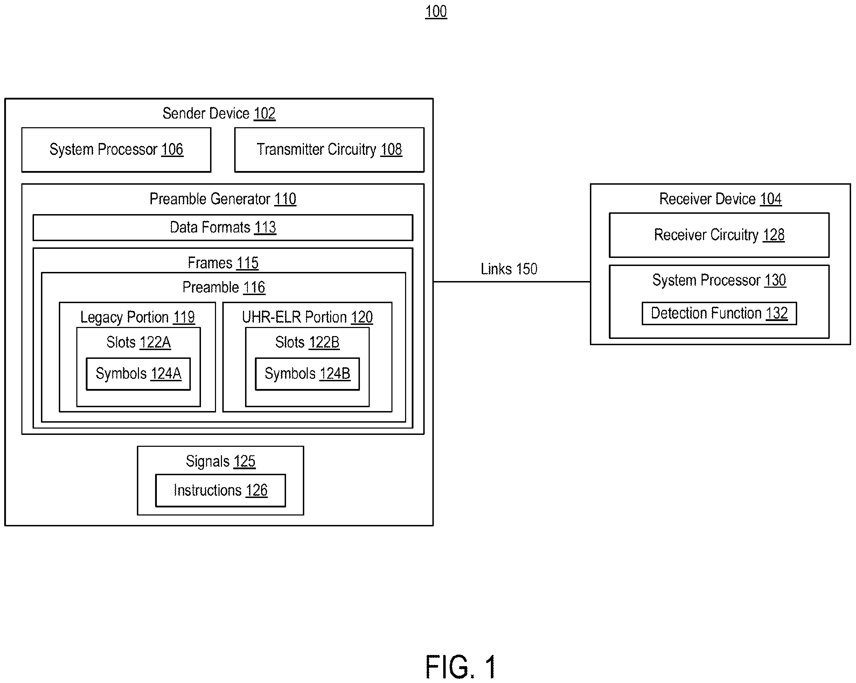

Referring to FIG. 1, illustrated is a diagram depicting an example communication environment 100 including communication systems (or communication apparatuses) such as a sender device 102 and a receiver device 104 that can communicate via one or more communication links 150. The sender device 102 can include one or more hardware components to initiate transmission of data packets across a network, such as at least one system processor 106, transmitter circuitry 108, and at least one preamble generator 110. The preamble generator 110 can include data formats 112 and frames 114 to define the data packets described herein. The frames 114 include a preamble 116 detected by the receiver device 104 prior to the reception of data packets or a wireless signal 125. The system processor along with the preamble generator can generate one or more signals 125 that can include instructions 126. The preamble 116 can include a legacy portion 118 and an ultra-high reliability enhanced long-range (UHR-ELR) portion 120 to allow cross compatibility, increased reliability, and range of the of the wireless signal 125. The legacy portion 118 and the UHR-ELR portion 120 can include a plurality of slots 122A and a plurality of slots 122B, respectively. Each of the plurality of slots 122A includes a plurality of symbols 124A. Each of the plurality of slots 122B includes a plurality of symbols 124B.

The sender device 102 can include any combination of hardware and software for providing signals that can be transmitted across one or more links 150. The sender device 102 can include any computing device, such as an access point of a wireless local area network (WLAN), such as a Wireless-Fidelity (Wi-Fi) router or access point, a smartphone, a computer or any other computing device configured for wireless communication and capable of transmitting wireless signals 125. The sender device 102 can also be configured to function as a receiver 104 and can include any functionality of the receiver 104.

For instance, the sender device 102 can include a transmitter communication system and the receiver device 104 can include a receiver communication system (sometimes referred to as "communication systems" herein). These components can operate together to exchange data (e.g., frames 114) through a wired or wireless medium (e.g., links 150). The sender device 102, as well as the receiver 104, can include application specific integrated circuit (ASIC), field programmable gate array (FPGA), or any combination of these, in one or more embodiments. The sender and the receiver can include any network communication devices such as wireless local area network (WLAN) access points (e.g., Wi-Fi router), a smartphone device, a personal computer, a smartwatch or any other device configured for wireless or network communication. For example, communication systems include transceiver circuitry to allow bi-directional communication between the communication systems or with other communication systems.

The receiver device 104 can include any combination of hardware and software for receiving and processing transmissions from the sender device 102 via the links 150. The receiver device 104 can include one or more hardware components to receive data packets across a network, such as receiver circuitry 128 and at least one system processor 130. The receiver device 104 can include a WLAN access point device, a computer, a smartphone or any other computing device capable of wireless communication. The receiver device 104 can be configured for any wireless communication, including WLAN communication, Bluetooth communication, cellular network communication, or any other radio frequency communication. The receiver device 104 can be configured to function as the sender device 102 and can include any functionality of the receiver device 104.

The links 150 can include any connection or functionality for providing connectivity between devices. The links can include any combination of wired and wireless connections or communications using any networking techniques or any transmission of data between the sender device 102 and the receiver device 104, by allowing communication and interaction between the entities. For instance, links 150 can be established occur through Universal Serial Bus (USB) cables, Ethernet cables, High Definition Multi-Media Interface HDMI) cables, wireless local area network (WLAN) functionalities, such as Wi-Fi access points, Bluetooth devices, cellular networks, among others. The efficiency of the links 150 can vary based on the distance, signal strengths, and interference of the signal transmission. Using the aspects of the technical solution described herein, there can be an improvement of the link budget asymmetry.

The system processor 106 can include any combination of hardware and software for processing data or receiving or generating signals for wireless communications across the link 150. For instance, the system processor 106 can include a processing unit, integrated circuit, microcontroller, digital signal processor or any other combination of circuitry and software for processing instructions and data. The system processor 106 can control, manage, or trigger each of the components within the sender device 102 described herein. For example, the system processor 106 can trigger the preamble generator 110 to generate a preamble.

The system processor 106 of the sender device 102 can serve as a central processing unit (CPU) for executing instructions, processing data, and controlling the operation of the sender device 102. The system processor 106 can manage the flow of data transmitted into the transmitter circuitry 108 according to one or more protocols and standards as described herein. The system processor 106 can generate packets using packet formats such as any of the packet formats described herein. In some embodiments, system processor 106 generates, forms, creates or modifies packets to conform to any IEEE 802.11 standard for WLAN communication.

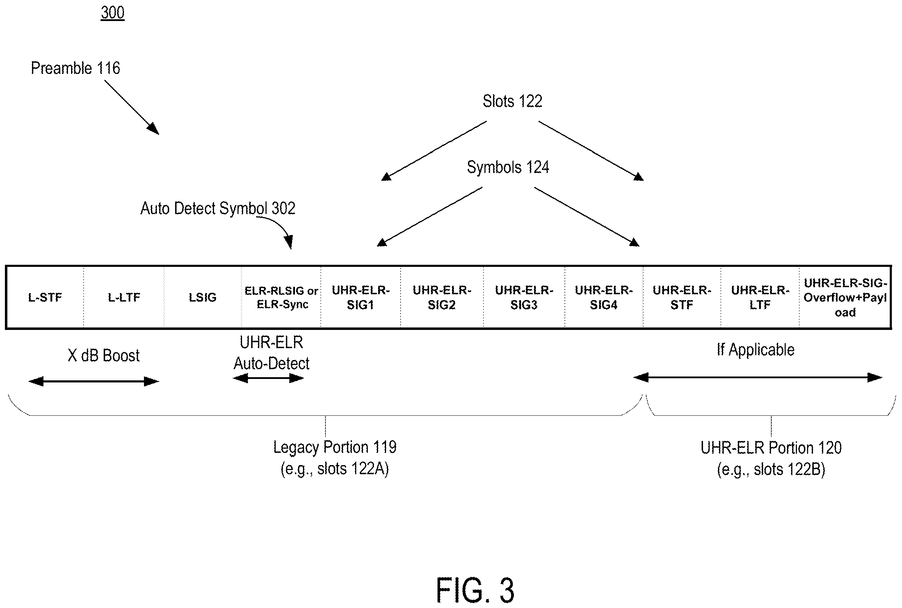

The system processor 106 can include a packet assembly unit to generate and encapsulate the data according to the packet format, such as any of the packet formats of FIGs. 3 -11 and identifies the data to provide to the transmitter circuitry 108 for transmission. The system processor 130 identifies the data based on a plurality of tasks associated with the sender device 102, such as end-user inputs, sensor data, application logic, event based triggers, among others. For example, an end-user, interacting with the sender device 102, provides input data via a user interface. In this manner, the system processor 106 can identify that the input data is to be transmitted wirelessly. Upon identification of the data, the system processor 106 can provide the input data to the transmitter circuitry 108 for transmission to the receiver device 104.

Each of the system processor 106 (e.g., an encoder), the transmitter circuitry 108, the receiver circuitry 128, and the system processor 130 (e.g., decoder) can be deployed or provided as a single processor or as a plurality of processors, application specific integrated circuit (ASIC), field programmable gate array (FPGA), or any combination of them. For example, the data transmitted between devices 102 and 104 can be organized or based on a UHR-ELR format 112 as defined by data formats 112 within the preamble generator 110 described herein. The UHR-ELR format 112 can include a type of communication system that includes high reliability, extended range, and can provide improved performance when transmitting data packets. Using the UHR-ELR format 112, the transmitter circuitry 108 can transmit the data packets under challenging conditions in which signal to noise ratio is low, such as harsh environments, electromagnetic interferences, and signal degradation situations. The UHR-ELR format 112 can reduce the asymmetry in the link budget between downlink (DL) and uplink (UL). For example, depending on the implementation, the asymmetry can be reduced by approximately six decibels (dB) based on the configuration of the UHR-ELR symbols described herein. The system processor 106 can detect the harsh conditions and proceeds to adjust the UHR-ELR format 112 for the data to overcome the harsh condition. For example, in response to the system processor 106 detecting electromagnetic interferences, the system processor 106 adjusts the UHR-ELR format 112 to IEEE 802.15.4g for the transmitter circuitry 108 to improve a wireless signal 125.

For example, concurrent to the system processor 106 providing the data to the transmitter circuitry 108, the system processor 106 can provide the preamble generator 110 with an indication of the provided data. The preamble generator 110 can create or generate preambles based on a desired format of the data. The preamble generator 110 can include the data formats 112 (sometimes referred to as a "data format 112") and frames 114 (sometimes referred to as a "frame 114"). The data formats 112 can be structures or encoding schemes that define how the data is organized and encoded before transmission to the receiver device 104. The data formats 112 can include digital modulation schemes (e.g., amplitude shift keying, Frequency shift keying, phase shift keying, etc.), frame formats (e.g., IEEE 802.11, IEEE 802.15.4g, Bluetooth packets, etc.), protocol data units (e.g., internet protocol, transmission control protocol, user datagram protocol, physical layer, etc.), and encoding schemes. When data transmission occurs, the preamble generator 110 can provide the system processor 106 with the desired data format 112 as shown in FIGs. 3-11.

Transmitter circuitry 108 can include any combination of hardware and software for conditioning and communicating signals 125 across the links 150. Transmitter circuitry 108 can include a transceiver with one or more signal processing circuit chains, for conditioning and processing signals for transmission or for conditioning and processing received signals. Transmitter circuitry 108 can include, for example, an RF signal processing chain configured for Wi-Fi wireless communication, cellular network communication, Bluetooth communication or any other type and form of wireless communication.

The transmitter circuitry 108 of the sender device 102 can include or correspond to a circuitry that receives the data from the system processor 106 and transmits a wireless signal 125 according to the data (e.g., preamble). In one configuration, the transmitter circuitry 108 can be coupled between the system processor 106 and an antenna (not shown). In this configuration, the transmitter circuitry 108 converts the data from the system processor 106 onto a carrier signal to generate the wireless signal 125 at an RF frequency (e.g., 10 MHz to 60 GHz), and transmits the wireless signal 125 through the antenna.

The preamble generator 110 can include any combination of hardware and software for generating and utilizing preambles 116. A preamble 116 can include any portion of a communication packet or a frame 114 that includes data (e.g., synchronization sequences, training symbols or other signals) that can be used by the receiver to synchronize the communication. The preamble generator 110 can establish synchronization between the sender device 102 and the receiver device 104. The preamble generator 110 can be integrated into Network Interface Cards (NICs), a baseband processor within the sender device 102, a FPGA, among others. The preamble generator 110 can generate a sequence of symbols (e.g., symbols 124A, symbols 124B) or bit patterns at the beginning of a data frame. The preamble generator 110 can include the data formats 112 and the frames 114.

The preamble generator 110 can generate preambles 116 that are configured or arranged to include one or more UHR-ELR features (e.g., symbols 134B for the UHR-ELR portion 130) within a legacy portion 119 of the preamble 116 preceding the UHR-ELR portion 130. For example, by including the UHR-ELR features, such as UHR-ELR symbols 134B within slots 132A of the legacy portion 119 at the portion of the preamble 116 preceding the UHR-ELR portion 130, the preamble generator 110 can notify or signal to the receiver device 104 that the incoming preamble 116 or frame 115 corresponds to a UHR-ELR transmission even prior to the receiver device 104 receiving the UHR-ELR portion 130 of the preamble 116 with its designated UHR-ELR symbols 134B. For example, by including a symbol 134B (e.g., corresponding to UHR-ELR transmission) within one of the slots 132A of the legacy portion 119 of the preamble 116 preceding the arrival of the UHR-ELR portion 130, the preamble generator 110 can notify the receiver device 104 that an incoming preamble 116 is a UHR-ELR preamble, signaling or indicating to the receiver device 104 to prepare, reset, configure or focus its detection on the upcoming UHR-ELR symbols 134B within the upcoming slots 132B of the UHR-ELR portion 130. needs to be detected before the UHR-ELR portion in order to signal arrival of that portion, otherwise the receiver may not be looking for UHR-ELR.

The data formats 112 can include any communication formats or functionality for supporting protocols facilitating communications between devices, such as a UHR-ELR format for frames 114. The data formats 112 can include any plurality of robust protocols to facilitate communication over extended distances with reduced risk of data loss, corruption, or interference. For example, the data formats 112 can include error-correcting codes such as Reed-Solomon codes, Forward Error Correction (FEC) techniques, and protocols such as Long Range Wide Area Network (LoRaWAN) and Narrowband IoT (NB-IoT). The data formats 112 can employ one or more algorithms to mitigate the effects of interference, fading, and noise, thereby maintaining data integrity even in challenging environments. The data formats 112 can incorporate redundancy and redundancy elimination strategies to enhance reliability and efficiency, making the data formats 112 well-suited for applications using dependable long-range communication.

The frames 114 can include any units of data for transmission between the sender device 102 and the receiver device 104. The frames 114 can include network packets having a payload and necessary control information for communication and headers with data for the processing of the packets. The frames 114 can include Ethernet frames, TCP frames, or IP frames. The frames 114 can include header information that indicate a source and destination addresses, error checking data like CRC, and a sequence numbers for ensuring proper sequencing of transmitted data. The frames 114 can include the preamble 116.

The frames 114 can correspond to the structure, format or layers of the OSI model. The layers of the OSI model include, a physical layer, a data link layer, a network layer, a transport layer, a session layer, a presentation layer, and an application layer. Aspects of the technical solution utilize and maximize the physical layer of the OSI model. Maximizing the physical layer can provide a more robust preamble and payload for communication between the sender device 102 and the receiver device 104. The frame 114 can be a physical layer protocol data unit (PPDU) of the UHR-ELR format 112.

The preamble 116 can include any segment of a communication frame 114 containing synchronization sequences, training symbols, and other signaling information used by the receiver to synchronize the timing, estimate channel characteristics, or detect the beginning of the frame. The preamble 116 can include or be identified using synchronization signals between the sender device 102 and the receiver device 104 to establish a common reference point for communication. The preamble can include of a patterns or symbols that help the receiver synchronize its internal clock with the sender's clock and adjust signal detection parameters accordingly. The preamble 116 can include simple alternating bit patterns, unique code sequences, or modulation schemes. The preamble 116 can include the legacy portion 118 and the UHR-ELR portion 120.

To generate the preamble 116, the preamble generator 110 can determine the structure of the preamble 116 according to the data format 112 (e.g., UHR-ELR) and the frame (e.g., PPDU). Upon the determined structure of the preamble 116, the preamble generator 110 can generate synchronization symbols 124, channel estimation symbols 124, and access control symbols 124 for the plurality of slots 122 within the legacy portion 118 and the UHR-ELR portion of the preamble 116. The preamble generator 110 can implement error detection and correction (e.g., cyclic redundancy check) to enhance reliability and resilience against transmission errors. From here, the preamble generator 110 can generate the preamble 116 and transmits the preamble 116 to the system processor 106. The system processor 106 can test and validate the preamble 116 through simulations to verify that the preamble 116 effectively interaction with the receiver device 104.

Once the preamble 116 is validated by the system processor 106, the system processor 106 can provide the preamble 116 to the transmitter circuitry 108 and can identify the power boost within the instructions 126 of the signal 125. Transmitter circuitry 108 an include amplification circuitry that can be responsive to control signals from the system processor 106 provide the power boost when transmitting particular symbols 124 of the preamble 116 (e.g., symbols 124B indicative of the UHR-ELR format 112). The power boost can include an increase in energy or power of transmission during the transmission of the particular symbols 124B. The power boost can increase transmission energy or power within the transceiver or antenna of the transmitter circuitry 108 to increase the signal strength of the wireless signal 125 pertaining to symbols 124B as they are transmitted over long distances and harsh environments. Using the power boost, the system processor 106 and the transmitter circuitry 108 can improve the range at which the given boosted symbols (e.g., L-STF, L-LTF, LSIG or any other) are visible or detectable by the receiver devices, reducing the chance of interference, attenuation and improving the signal quality and visibility of the particular symbols 124. The power boost can apply to any of the symbols 124 in the legacy portion 118 of the preamble 116 or any of the symbols 124 of the UHR-ELR portion 120 of the preamble 116.

The power boost can sometimes lead to increased energy consumption or increased interference with the nearby communication systems (e.g., sender devices 102, receiver devices 104) operating within a similar frequency band. To reduce energy consumption or interference and improve battery life, the remainder of the preamble 116 for the PDDU frame 114 of the UHR-ELR format 112 can reduce energy consumption by improving the link budget asymmetry between the sender device 102 and the receiver device 104. For example, using the preamble 116 for the PDDU frame 114 of the UHR-ELR format 112 can improve the imbalance of transmission power by preparing the receiver device 104 to receive the power boost along with the wireless signal 125. In another example, using the preamble 116 for the PDDU frame 114 of the UHR-ELR format 112 can improve on a difference in antenna gain and directionality between the sender device 102 and the receiver device 104 based on the UHR-ELR portion 120 of the preamble 116 improving the directional antenna of the receive device 104. Furthermore, the data of the PPDU frame 114 can be rotated 90°, or an arbitrary phase, with respect to a symbol in at least one of the plurality of slots 122A or the plurality of slots 122B to reduce false detection.

The system processor 106 can operate with the transmitter circuitry 108 to provide the power boost and the signal 125 during transmission of at least one of a legacy-short term training field (L-STF) or a legacy-long term training field (L-LTF) of the legacy portion 118 of the preamble 116. The wireless signal 125 generated by the transmitter circuitry 108 can include the L-STF and the L-LTF as shown in FIGs. 3-11. In at least one of the one or more ELR symbols 124 can include a symbol that can be the same as the symbol in the L-LTF and can include a symbol that can be same as a symbol in at least one of a universal signal field one (USIG1) or a universal signal field two (USIG2) of the legacy portion of the preamble. The L-STF and the L-LTF have a power boost of any amount of decibels (dB), such as 2, 3, 4, 6 or more than 6 dB. The transmitter circuitry 108 can apply the power boost to at least one of the L-STF or the L-LTF of the legacy portion of the preamble 116 within the wireless signal 125. When the transmitter circuitry 108 applies the power boost and the preamble 116 to the data, the link budget asymmetry between the DL and UL decrease by approximately 6 dB. From here, the transmitter circuitry 108 can transmit the wireless signal 125 to the receiver circuitry 128 of the receiver device 104, using the link 150. The power boost applied to the L-STF and L-LTF of the legacy portion of the preamble can be adjusted based on channel conditions to improve reception at the receiver device 104. The wireless signal 125 can include the PDDU frame 114 with the data.

The legacy portion 118 can include any signaling slots 122 or symbols 124 that can include established signaling sequences or patterns facilitating synchronization and frame delineation between the sender device 102 and the receiver device 104. The legacy portion 118 can include slots 122 and symbols 124 that were set in existing standards of the data formats 112. These sequences can include repetitive bit patterns such as alternating ones and zeros, long runs of ones or zeros, Barker codes, among others. The legacy portion 118 can aid in synchronization and incorporate error detection or correction mechanisms to enhance data integrity. The legacy portion 118 can ensure backward compatibility with older systems and interoperability across diverse network environments. The legacy portion 118 can include a plurality of slots 122A.

The slots 122 can include any designated portions of the preamble 116 for including particular symbols 124. For instance, a slot 122A of the legacy portion 118 can allow for the alignment of communication protocols for the sender device 102 and the receiver device 104 using symbols 124 of the existing data formats 112 (e.g., communication standards). The slots 122A can include fixed-length bit patterns, alternating sequences, frequency-modulated signals, among others. The slots 122A can balance the need for robust synchronization with the overhead of transmitting additional preamble 116 information. The slots 122A can include a plurality of symbols 124A.

Each of the slots 122 can corresponds to a time duration of a transmission. For example, slots 122 can correspond to a duration of 4us, 8us, 12us or any other time duration. By knowing the time durations of the slots, the receiver 104 can able to utilize a more visible boosted incoming signal (e.g., boosted L-STF) and by counting the time duration corresponding to time intervals of the known slots between detected signal of the boosted slot and a time interval of the particular slot 122 that is predetermined or designated for UHR-ELR symbol 124B that can be indicative of the frame 114 being a UHR-ELR frame. In response to detecting a UHR-ELR symbol 124B at the particular time interval corresponding to the slot 124B that is a set time duration apart from the boosted L-STF signal, the receiver 104 can determine that the incoming frame 114 is a frame transmitted according to UHR-ELR format.

The UHR-ELR portion 120 can include sections of the preamble 116 that can include one or more designated slots 122 for storing symbols 124 that can be indicative of the UHR-ELR data format 112. The UHR-ELR portion 120 can include signaling sequences or patterns that facilitate synchronization and frame delineation between the sender device 102 and the receiver device 104 according to UHR-ELR sequences or transmissions. The UHR-ELR portion 120 can indicate a configuration for the receiver device 104 to receive data in accordance with a UHR-ELR format 112. The ULR-ELR portion 120 can involve s error-correction coding, modulation schemes such as Orthogonal Frequency Division Multiplexing (OFDM), or adaptive modulation techniques tailored to counteract fading and interference in challenging environments. The challenging environments can include industrial facilities or outdoor settings. The UHR-ELR portion 120 can incorporate advanced synchronization mechanisms, resilient to timing variations and frequency offsets, thereby fortifying the preamble's ability to reliably initiate and maintain communication links 150 under adverse conditions.

The UHR-ELR portion 120 of the preamble 116 can include one or more segments to represent UHR-ELR communication. The one or more segments can include sequences, signals, or symbols 124B to define the characteristics and capabilities of the UHR-ELR communication. The system processor 106 or the preamble generator 110 can define the symbol 124B patterns that identify UHR-ELR capability. For example, to use UHR-ELR capability, the system processor 106 defines a plurality of symbols 124B within the UHR-ELR portion 120 of the preamble 116. The UHR-ELR portion 120 of the preamble can include redundant information for receiver device 104 to use for at least one of demodulation or error correction of the PPDU frame 114.

To generate the UHR-ELR portion 120, the preamble generator 110 can implement encoding techniques optimized for long-range communication with high reliability, includes signal for channel estimation, and implements error detection. For example, to implement error detection for the UHR-ELR, the preamble generator 110 can add a checksum to the UHR-ELR portion 120 of the preamble 116. Upon generation of the UHR-ELR portion 120 of the preamble 116, the preamble generator 110 verifies that the UHR-ELR portion 120 can be in compliance with the data format 112 of the sender device 102. The UHR-ELR portion 120 includes a plurality of slots 122B.

The plurality of slots 122A can provide, include or have designated time intervals or frequency bands allocated for the data within the data transmission. For instance, each of the slots 122 (e.g., 122A or 122B) can have time intervals corresponding to the duration of the transmission of the slot during the transmission of the preamble 116. For instance, if each slot 122 has a time interval of 4us and the first slot is a L-STF slot, then a fourth slot begins at 12us from the start of the L-STF slot and ends 16us from the start of the same L-STF slot. Therefore, if L-STF slot is boosted in power and therefore more visible and detected by the receiver 104, the receiver circuitry 128 can hone in through a noisy signal at a known time interval from the boosted L-STF slot marking the start of the frame 114 to determine if a UHR-ELR symbol 124 is identified at the particular known time interval from the reference L-STF slot at the start of the preamble 114.

The plurality of slots 122A can allow synchronization between the sender device 102 and the receiver device 104, estimate characteristics of the communication channel, and facilitate access control. The preamble generator 110 can generate the plurality of slots 122A according to the data formats 112. For example, if the sender device 102 conforms to IEEE 802.11, thus, the preamble generator 110 can generate the plurality of slots 122A based on IEEE 802.11. The structure of each slot in the plurality of slots 122A can depend on the intended purpose defined by the preamble generator 110. For example, the preamble generator 110 can define the structure of a subset of slots 122A of the plurality of slots 122A for synchronization. Therefore, the subset of slots 122A can include a synchronization identifier.

The symbols 124A of the legacy portion 118 can represent information about transmissions between the sender device 102 and the receiver device 104. The symbols 124A can include a plurality of forms. For instance, the symbols 124A can include binary digits (0s and 1s), electrical voltages, light pulses, or radio waves. Each symbol 124 an indicate a piece of data encoded according to a predetermined scheme such as ASCII, Unicode, or binary encoding. Moreover, modulation techniques such as amplitude modulation (AM), frequency modulation (FM), or phase modulation (PM) can be employed to encode symbols 124A onto signals 125 for efficient transmission over different mediums.

The slots 122B of the UHR-ELR portion can include designated slots or portions of the preamble 116 for UHR-ELR symbols 124. Slots 124B can allow for the alignment of communication protocols for the sender device 102 and the receiver device 104 according to UHR-ELR data format 112. The slots 122B can include fixed-length bit patterns, alternating sequences, frequency-modulated signals, among others. The slots 122B can balance the need for robust synchronization with the overhead of transmitting additional preamble 116 information. The slots 122B can include a plurality of symbols 124B.

The plurality of slots 122B can provide time intervals or frequency bands allocated for the data within the data transmission to achieve UHR-ELR performance. The plurality of slots 122B can include at least one of synchronization slots, channel estimation slots, error correction slots control slots, and reserved slots specifically for UHR-ELR capability. For example, the preamble generator 110 can generate a preamble 116 with channel estimation slots 122B and error correction slots 122B. The structure of each slot in the plurality of slots 122B can depend on the intended purpose defined by the preamble generator 110. For example, the preamble generator 110 can define the structure a subset of slots 122B of the plurality of slots 122B for channel estimation. Therefore, the subset of slots 122A can include a channel estimation identifier. Each slot 122 in the plurality of slots 122B can include a plurality of symbols 124B. The plurality of symbols 124B can include one or more identifiers for the receiver device 104 upon reception of the preamble 116. The plurality of symbols 124A can include one or more identifiers for the receiver device 104 upon reception of the preamble 116. The plurality of symbols 124A and the plurality of symbols 124B (generally referred to as "the one or more ELR symbols 124") can include one or more symbols known by the sender device 102 and the receiver device 104 to indicate that the PPDU frame 114 is in accordance UHR-ELR format 112.

The symbols 124B of the UHR-ELR portion 120 can represent information about the UHR-ELR format 112 transferred between the sender device 102 and the receiver device 104. Symbols 124B can be predetermined symbols for UHR-ELR communications placed in predetermined slots 122B to allow receivers 104 of transmissions (e.g., either 102 or 104) to identify the incoming frame 114 as the UHR-ELR frame. The symbols 124B can include a plurality of forms. For instance, the symbols 124A can include binary digits (0s and 1s), electrical voltages, light pulses, or radio waves. Each symbol 124 an indicate a piece of data encoded according to a predetermined scheme such as ASCII, Unicode, or binary encoding. Moreover, modulation techniques such as amplitude modulation (AM), frequency modulation (FM), or phase modulation (PM) can be employed to encode symbols 124A onto signals 125 for efficient transmission over different mediums.

The signals 125 can include any transmission signals or data transmitted between devices (e.g., 102 and 104). The signals 125 can include a plurality of electromagnetic waves or electrical impulses, such as radio frequency (RF) transmissions for WLAN (e.g., Wi-Fi), Bluetooth, cellular or any other transmissions. The signals 125 can include frames 114 to be transmitted along with the preambles 116 with the UHR-ELR portions 120. The signals 125 can be in the form of radio waves, microwaves, infrared signals, pulses of light. These signals 125 can carry encoded information, such as audio, video, or digital data, and can travel through a medium (e.g., air or cables), to reach the intended receiver device 104. Advanced modulation techniques and signal processing methods can be used for efficient and reliable transmission, mitigating noise and interference for clear communication.

The instructions 126 of the signals 125 can include any transmissions, commands or instructions associated with the signal 125. The instructions 126 can indicate a power boost for the symbols 124A or the symbols 124B. The power boost can enhance the efficiency and effectiveness of the signal 125 by amplifying the transmission capabilities of the sender device 102. The power boost can correspond to a surge in electrical current, a heightened frequency modulation, or a bolstering of electromagnetic resonance. The power boost can increase the range and speed of the signal 125 while mitigating signal degradation.

The receiver circuitry 128 can include any combination of hardware and software for processing and receiving signals 125 across the links 150. the receiver circuitry 128 can include a receiver with one or more signal processing circuit chains, for conditioning and processing signals for conditioning and processing received signals. The receiver circuitry 128 can include, for example, an RF signal processing chain configured for Wi-Fi wireless communication, cellular network communication, Bluetooth communication or any other type and form of wireless communication.

The receiver circuitry 128 of the receiver device 104 can be a circuitry that receives the wireless signal 125 from the sender device 102, across the link 150, and obtains data from the received wireless signal 125. In one configuration, the receiver circuitry 128 can be coupled between the system processor 130 and an antenna (not shown). In this configuration, the receiver circuitry 128 can receive the wireless signal 125 though an antenna and converts the wireless signal 125 at an RF frequency according to a carrier signal to obtain the data from the wireless signal 125. The receiver circuitry 128 can provide the data to the system processor 130.

The system processor 130 of the receiver device 104 can include or correspond to a processor that receives the data from the receiver circuitry 128 and can obtain information from the received data. In one embodiment, the system processor 130 includes a decoder that extracts information from the data, such as based on the packet format of any examples of FIGs. 3-11. The decoder can decode the data from the power boost to obtain the information data generated by the system processor 106 of the sender device 102. The instructions 126 can indicate, to the receiver device 104, to detect the one or more ELR symbols 124 at a predetermined time after receiving of the at least one of the L-STF or the L-LTF by the receiver device 104. The decoder of the system processor 130 can extract the one or more ELR symbols 124 from the data within the wireless signal 125 to feed into a detection function 132 executed by the system processor 130.

The system processor 130 can include any combination of hardware and software for processing signals and data for wireless communications across the link 150. For instance, the system processor 130 can include a processing unit, integrated circuit, microcontroller, digital signal processor or any other combination of circuitry and software for processing instructions and data. The system processor 130 can execute a detection function 132 to automatically detect frames 114. For example, the sender device 102 can operate at a network layer of an open system interconnected (OSI) model by encapsulating transmission data into the data packets. The sender device 102 can include control logic to coordinate the operation of one or more components described herein to manage a flow of data packets, inmate transmissions, handle error conditions among others.

The detection function 132 can include a function, an algorithm or formula executed by the system processor 130 to identify and automatically detect errors during the transmission of the signal 125 from the sender device 102 to the receiver device 104. The detection function 132 can include checksums, cyclic redundancy checks (CRC), and parity bits. These functions work by appending additional bits to the received data, which are calculated based on the content of the received data.

The detection function 132 can include one or more algorithms to detect the presence of the one or more ELR symbols 124 within the slots 122. For example, upon reception of the preamble 116 within the wireless signal 125, the receiver circuitry 128 can transmit the preamble 116 to the system processor 130. From here, the system processor 130 can execute the detection function to detect the one or more ELR symbols 124 within the slots 122 of the legacy portion 118 or the UHR-ELR portion 118 of the preamble 116. The one or more ELR symbols can be configured to convey receiver control information. The control information can be indicative of at least one of a modulation parameter or a transmission mode. Upon a successful detection of the one or more ELR symbols 124, the system processor 130 can configure the receiver device 104 to automatically detect that the PPDU frame 114 of the preamble 116 is in accordance with the UHR-ELR format 112. The system processor 130 can detect that the PPDU frame 114 is in accordance with the UHR-ELR format 112 based on the decoder identifying an indication within the one or more ELR symbols 124.

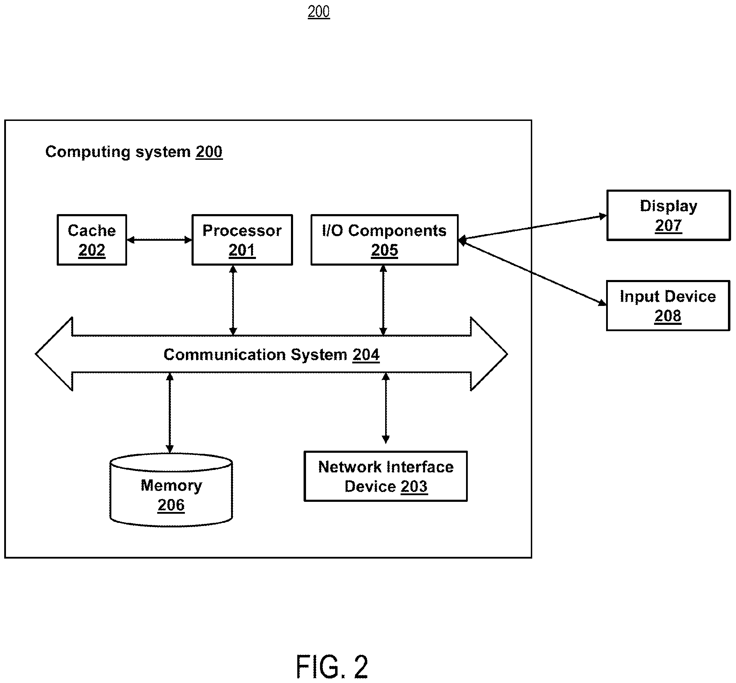

FIG. 2 is a schematic block diagram of a computing system, according to an embodiment. An illustrated example computing system 200 includes one or more processors 201 in direct or indirect communication, via a communication system 204 (e.g., bus), with memory 206, at least one network interface controller 203 with network interface port for connection to a network (not shown), and other components, e.g., input/output ("I/O") components 205. Generally, the processor(s) 201 will execute instructions (or computer programs) received from memory. The processor(s) 201 illustrated incorporate, or are connected to, cache memory 202. In some instances, instructions are read from memory 206 into cache memory 202 and executed by the processor(s) 201 from cache memory 202. The computing system 200 can not necessarily include all of these components shown in FIG. 2 and can include other components that are not shown in FIG. 2.

In more detail, the processor(s) 201 can be any logic circuitry that processes instructions, e.g., instructions fetched from the memory 206 or cache 202. In many implementations, the processor(s) 201 are microprocessor units or special purpose processors. The computing device 205 can be based on any processor, or set of processors, capable of operating as described herein. The processor(s) 201 can be single core or multi-core processor(s). The processor(s) 201 can be multiple distinct processors.

The memory 206 can be any device suitable for storing computer readable data. The memory 206 can be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray^{®} discs). A computing system 200 can have any number of memory devices 206.

The cache memory 202 is generally a form of computer memory placed in close proximity to the processor(s) 201 for fast read times. In some implementations, the cache memory 202 is part of, or on the same chip as, the processor(s) 201. In some implementations, there are multiple levels of cache 202, e.g., L2 and L3 cache layers.

The network interface controller 203 manages data exchanges via the network interface (sometimes referred to as network interface ports). The network interface controller 203 handles the physical and data link layers of the OSI model for network communication. In some implementations, some of the network interface controller's tasks are handled by one or more of the processor(s) 201. In some implementations, the network interface controller 203 is part of a processor 201. In some implementations, the computing system 200 has multiple network interfaces controlled by a single controller 203. In some implementations, the computing system 200 has multiple network interface controllers 203. In some implementations, each network interface is a connection point for a physical network link (e.g., a cat-5 Ethernet link). In some implementations, the network interface controller 203 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 203 implements one or more network protocols such as Ethernet. Generally, a computing device 205 exchanges data with other computing devices via physical or wireless links through a network interface. The network interface can link directly to another device or to another device via an intermediary device, e.g., a network device such as a hub, a bridge, a switch, or a router, connecting the computing device 200 to a data network such as the Internet.

The computing system 200 can include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components can include an I/O interface, external serial device ports, and any additional co-processors. For example, a computing system 200 can include an interface (e.g., a universal serial bus (USB) interface) for connecting input devices, output devices, or additional memory devices (e.g., portable flash drive or external media drive). In some implementations, a computing device 200 includes an additional device such as a co-processor, e.g., a math co-processor can assist the processor 201 with high precision or complex calculations.

The components 209 can be configured to connect with external media, a display 207, an input device 208 or any other components in the computing system 200, or combinations thereof. The display 207 can be a liquid crystal display (LCD), an organic light emitting diode (OLED) display, a flat panel display, a solid-state display, a cathode ray tube (CRT) display, a projector, a printer or other now known or later developed display device for outputting determined information. The display 207 can act as an interface for the user to see the functioning of the processor(s) 201, or specifically as an interface with the software stored in the memory 206.

The input device 208 can be configured to allow a user to interact with any of the components of the computing system 200. The input device 208 can be a plurality pad, a keyboard, a cursor control device, such as a mouse, or a joystick. Also, the input device 208 can be a remote control, touchscreen display (which can be a combination of the display 207 and the input device 208), or any other device operative to interact with the computing system 200, such as any device operative to act as an interface between a user and the computing system 200.

FIGs. 3-12 depict examples 300-1200 of packet formats of the technical solutions that can be used to improve long range communications, such as UHR-ELR communication in accordance with WLAN (e.g., Wi-Fi) infrastructure and 802.11 wireless standards (e.g., 802.11bn or others). For example, systems 100 or 200 depicted in FIGs. 1-2 can be designed, implemented or configured to use, implement, process or communicate using any of the transmissions according to any of the 802.11 standards. Systems 100 and 200 can be configured to communicate, receive, send, encode, decode of otherwise process any of the packet formats depicted in FIGs. 3-12 or any derivates thereof. Any of the devices 102 or 104 can include a WLAN access point (AP), a station (STA), either one of which can serve as a sender 102 or receiver 104 for any type and form of communicating using a wireless standard, such as an 802.11 standard.

The technical solutions can provide UHR-ELR packet formats 112 for enhanced long-range that in one application can be used to reduce the link budget asymmetry between DL and UL by about 6 dB or any other amount or value of decibels. For example, the technical solutions can be designed, configured or implemented such that L-STF and L-LTF detection does not cause delays in communication. For instance, symbols 124 or slots 122 corresponding to L-STF and L-LTF can have any amount of dB power-boost between 2 and 8 dB, such as 3-dB power-boost, to improve the strength or amplitude of the signal and therefore lower the SNR and improved visibility and detection of those symbols, allowing receivers to more accurately read or identify the new preamble 116. Receiver device 104 or sender device 102 techniques (such as CFO or SFO pre-correction at Tx) can allow for the L-STF or L-LTF detection that can be done at lower SNRs than what is desired by UHR-ELR auto-detection, sig-field decoding, and payload decoding.

The formats 112 in FIGs 3-12 can have one or more characteristics in common. For instance, the symbols 124 of UHR-ELR-Sig1, UHR-ELR-Sig2, UHR-ELR-Sig3, and UHR-ELR-Sig4 can include sig-field symbols 124 with a similar tone-plan and modulation code scheme (MCS) or number of spatial streams (Nss) of any arrangement, such as MCS 0, 1 stream, as high-efficiency single-user (HE-SIA) and user signal (USIG) symbol. The packets of these various formats 112 can carry the same content but can support different interleaving and BCC coding to provide 4x (6 dB) processing gain.

In an example, for UHR-ELR signal contents (i.e., UHR-ELR portion 120), the UHR-ELR packet or frame 114 can be transmitted with payload UHR-ELR-Sig contents (e.g., slots 122), that can include any data, such as basic service set (BSS) Color (6 bits), transaction opportunity (TXOP) (7 bits), resource unit (RU) size (26, 52, or 106, 2 bits), long training field (LTF) size (1.6usec-2xLTF or 3.2usec-4xLTF, 1 bit), cyclic redundancy check (CRC) (4 bits), tail bits (6 bits). The rest of signal field can be transmitted as UHR-ELR-Sig-Overflow with binary convolutional (BCC) coding using MCS 0 and over 1 stream after UHR-ELT-STF and the LTF, which can include LENGTH information (9-12 bits), payload coding (1 bit), Payload MCS (1-2 bits), device or station identifiers (STA-ID) (11 bits), Pre-forward error correction (FEC) padding and packet extension (3 bits), where payload is only 1 stream. UHR-ELR-STF, LTF, Sig-Overflow, or Payload 124B can be transmitted over 26, 52, or 106 tone RUs with a specific tone plan, such as a tone plan that can be distributed for improved power spectral density (PSD).

For example, for UHR-ELR Signal Contents 120, UHR-ELR packet can be transmitted without the payload and can be used to request TF from AP. The UHR-ELR-Sig contents 120 can include BSS Color (6 bits), STA-ID (11 bits), CRC (3 bits), tail bits (6 bits). The UHR-ELR-Sig contents 120 can include BSS Color (6 bits), STA-ID (11 bits), CRC (4 bits), tail bits (5 bits). The UHR-ELR-Sig contents 120 can include BSS Color (6 bits), STA-ID (mapped to 10 bits), CRC (4 bits), tail bits (6 bits). The packet can be a pre-specified or pre-negotiated fixed duration.

FIG 3 depicts an example of a packet format 300 in which an ELR auto detect symbol is inserted into a legacy portion 119 of the preamble 116 to notify a receiver 104 of the upcoming UHR-ELR portion of the transmission, , in accordance with the technical solution. As shown in example 300, preamble 116 can include different slots 122 with symbols 124 distributed within the legacy portion 119 and the UHR-ELR portion 130 of the preamble 116. Symbols 124A of the legacy portion 119 can include L-STF, L-LTF, LSIG, ELR-RLSIG or ELR-SYNC, UHR-ELR-SIG1, UHR-ELR-SIG2, UHR-ELR-SIG3 and UHR-ELR-SIG4 arranged in their respective slots 122A. Symbols 124B of the UHR-ELR portion 130 can include UHR-ELR-STF, UHR-ELR LTF and UHR-ELR-SIG-Overload+Payload can be arranged in their respective slots 122B.

Preamble 116 can include an auto detect symbol 302 serving as an ELR symbol to indicate to the receiver device 104 that the incoming frame 115 or preamble 116 includes an upcoming UHR-ELR portion 120 to arrive following the completion of the transmission of the legacy portion 119. For ease of description, the first portion of the preamble 116 can include legacy symbols 124A (e.g., symbols 124 of L-STF, L-LTF, LSIG, RL-SIG) within slots 122A. However, one of the slots 122A of the legacy portion 119 can include an auto detect symbol 302 corresponding to the ELR feature or a symbol. The auto detect symbol 302 can be or include an indicator, a flag, a signal or a characteristic that is indicative of the upcoming UHR-ELR portion 120 to arrive at the receiver 104 following the legacy portion 119 in which the auto detect symbol 302 is inserted.

The auto detect symbol 302 can be inserted within a slot 122A of the legacy portion 119 that is preceding the first slot 122B of the UHR-ELR portion 130 (e.g., the slot 122B of the UHR-ELR-STF symbol 124B) by a predetermined time interval, which can be a time interval of any duration (e.g., up to 2, 4, 8, 12, 16, 20, 24, 28 or more than 28 ms). By inserting the auto detect symbol 302 at a predetermined slot 122A that is located a set time duration or time interval prior to the start of the first slot 122B of the UHR-ELR portion 120, the receiver device 104 can detect the auto detect symbol 302 and determine or count the time interval at which point the URL-ELR portion 120 can begin being received at the receiver device 104. In doing so, the receiver device 104 can prepare, configure, adjust or reset its listening or detection circuitry or features to focus on the portion of the signal at the anticipated or expected start of the UHR-ELR portion 120 (e.g., after the set time interval ends)..

For example, the auto detect symbol 302 can include a symbol 124 that can include ELR-RLSIG that can be 90 degree or 180-degree rotated from a reference symbol, signal or a transmission. For instance, the rotation can be with respect to symbol 124 LSIG. The pilot tones (e.g., a symbol 124 that include LSIG) can be rotated in addition to the data tones (e.g., symbol 124 that includes ELR-RLSIG). In the event of a 90-degree rotation, auto-detection can include a 90-degree rotation check plus a repetition check. In the event of a 180-degree rotation, auto-detection can include repetition check with sign detection. If the majority of data (e.g., and pilot) tones can be used for detection, a processing gain can be greater than 6 dB. Instead of using a symbol 124 of ELR-RLSIG, a symbol 124 of ELR-Sync can be used with a fixed pre-determined tone modulation. This can be similar to the symbols 124 of LTF, but with a different pattern. In example 300, the preamble 116 with a symbol 124 of ELR-Sync, a repetition check for HE, EHT, or non-ELR UHR can be in parallel with the sync symbol detection.

The auto detect symbol 302 (e.g., symbol 124 of ELR-RLSIG or the symbol of ELR-Sync) can allow for UHR-ELR auto-detection during the receiving of the preamble 116 by the receiver device 104. The UHR-ELR auto detection can involve the receiver device 104 automatically detecting (i.e., using the detection function 132) that the PPDU format 112 of the preamble 116 is in accordance with the UHR-ELR format 112. The UHR-ELR auto-detection can occur responsive to a failure in a parity check of LSIG within the preamble 116. Upon detection of the parity bit, the receiver device 104 can ignore the LSIG and RLSIG parity-check and contents of LSAIG within the preamble 116. The information of the LSIG of the preamble 116 can be repeated in in another slot 122, such as a slot for symbol 124 used for UHR-ELR-Sig-Overflow. The UHR-ELR auto-detection can occur in the vent that the LSIG of the preamble 116 parity passes an indicated rate > 6 Mbps. The sender device 102 or the receiver device 104 (e.g., non-801.11bn devices) can detect the symbol 124 of UHR-ELR as the sender device 102 (e.g., 11ag), or the sender 102 (e.g.,11n), responsive to a 90-degree, or 180 degree, rotation of the symbol 124 of ELR-RLSIG. Thus, sig CRC can fail. The UHR-ELR auto-detection cannot be a subset of UHR auto-detection.

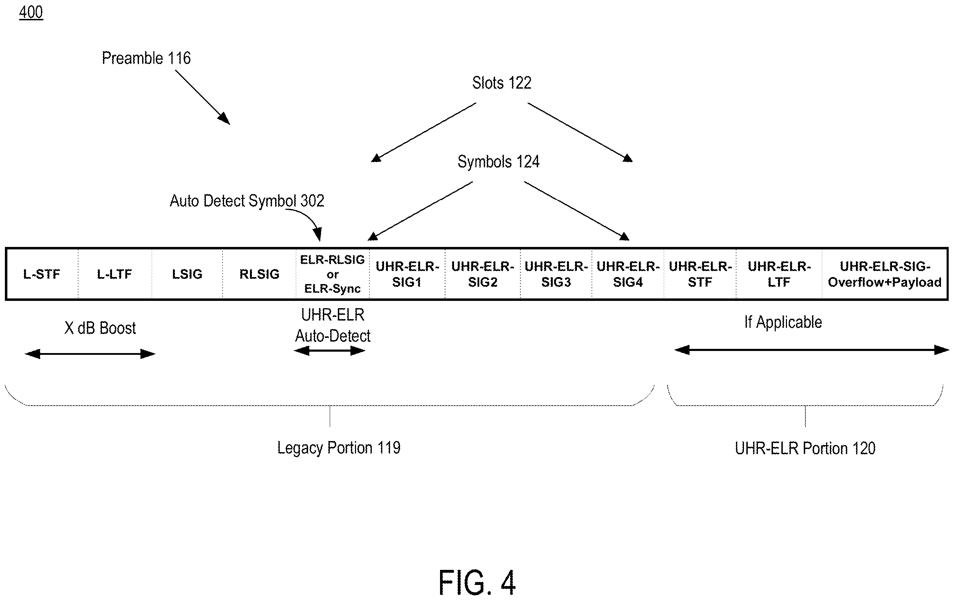

Referring to FIGs. 4, depicts another example of a packet format 400 in FIG. 4 in which an ELR auto detect symbol 302 can be inserted into a legacy portion 119 of the preamble 116 to notify a receiver 104 of the upcoming UHR-ELR portion of the transmission ,. As shown in example 400, preamble 116 can include different slots 122 with symbols 124. Symbols 124A can include L-STF, L-LTF, LSIG, RLSIG, ELR-RLSIG or ELR-SYNC, UHR-ELR-SIG1, UHR-ELR-SIG2, UHR-ELR-SIG3, UHR-ELR-SIG4, corresponding to the slots 122A of the legacy portion 119. Symbols 124B can include UHR-ELR-STF, UHR-ELR LTF, UHR-ELR-SIG-Overload+Payload, corresponding to the UHR-ELR portion 120. Each of the symbols ELR-RLSIG or ELR-Sync can be or serve as an auto detect symbol 302 to indicate to the receiver device 104, during the transmission of the frame 115 or the preamble 116 that the legacy portion 119 is to be followed by the UHR-ELR portion 120. The UHR-ELR auto-detection can occur after HE, EHT, or UHR auto-detection. In response to a majority of data tones (e.g., the symbol 124 of LSIG) can be used for repetition detection, processing gain can be greater than a predetermined amount of decibels, such as 3 dB. Instead of using the symbol 124 of ELR-RLSIG, the symbol 124 of ELR-Sync can be used with a fixed pre-determined tone modulation (e.g., similar to the slot 122 including the symbol 124 of LTF, but with a different pattern). The receiver device 104 can distinguish whether a symbol after the symbol 124 of RLSIG is the first the symbol 124 of HE-SIGA or the slot 122 including the symbol 124 of USIG, the symbol 124 of ELR-RLSIG, or the symbol 124 of ELR-Sync124B which can use parallel processing.

In some examples for the packet format 400, UHR-ELR auto-detection can occur responsive to the symbol 124 of LSIG or the symbol 124 of LSIG and RLSIG parity-checks fail. The receiver device 104 can ignore the symbol 124 of LSIG and RLSIG contents as the information of the symbol 124 of LSIG can repeat in the payload of the preamble 116 (e.g., UHR-ELR-Sig-Overflow). In some examples, the UHR-ELR auto-detection can occur responsive to the symbol 124 of LSIG parity passing. The symbol 124 of LSIG can indicates a rate greater than 6 Mbps. In some examples, the sender device 102 or the receiver device 104 (e.g., non-8011.1bn device) can detect the UHR-ELR (e.g.,11ax or 11be implementations), but sig-fields can fail CRC. In some examples, the UHR-ELR auto-detection is a subset of UHR auto-detection.

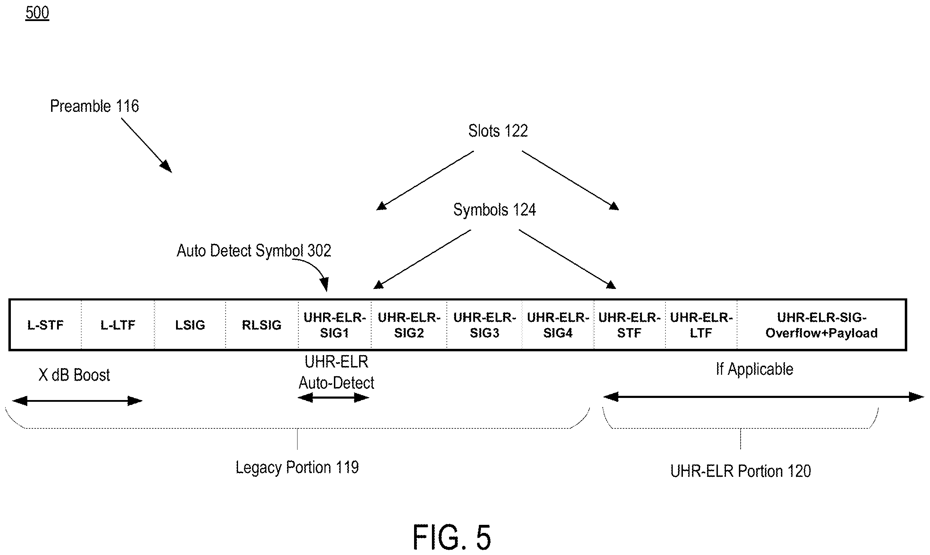

Referring to FIG. 5, depict another example of a packet format 500 in which an ELR auto detect symbol 302 can be inserted into a legacy portion 119 of the preamble 116 to notify a receiver 104 of the upcoming UHR-ELR portion of the transmission.. As shown in example 500, preamble 116 can include different slots 122 with symbols 124. Symbols 124A can include L-STF, L-LTF, LSIG, RLSIG, UHR-ELR-SIG1, UHR-ELR-SIG2, UHR-ELR-SIG3 and UHR-ELR-SIG4. Symbols 124B of the UHR-ELR portion 120 can include UHR-ELR-STF, UHR-ELR LTF and UHR-ELR-SIG-Overload+Payload, among others. The auto detect symbol 302 for indicating the UHR-ELR portion 120 following the legacy portion 119 can provided as a symbol 124 of UHR-ELR-SIG1 within slot 122A of the legacy portion 119. The UHR-ELR-SIG1 symbol can have a 90-degree phase rotation (including pilot tones), while other symbols 124 of UHR-ELR-SIG (e.g., UHR-ELR-SIG2, UHR-ELR-SIG3, UHR-ELR-SIG4) may not have the same rotation. The slot of UHR-ELR auto-detection within the UHR-ELR portion 120 can occur after HE, EHT, or UHR auto-detection. Responsive to the majority of data tones and pilot tones being used for rotation detection, the processing gain can be greater than 3dB. The UHR-ELR auto-detection can occur in the event that the symbol 124 of LSIG or the symbol of 124 LSIG and RLSIG parity-checks fail. The receiver device 104 can ignore the symbol 124 of LSIG and RLSIG as information of the symbol 124 of LSIG can repeat in the payload of the preamble 1116 (e.g., UHR-ELR-Sig-Overflow). The UHR-ELR auto-detection can occur in the event that the symbol 124 of LSIG parity passes and indicates a rate greater than 6 Mbps. The sender device 102 or the receiver device 104 can detect the slot 122 of UHR-ELR (e.g., as 11ax/be), but the slot 122 of UHR-ELR sig-fields can fail CRC. A receiver device 104 (e.g., non-8011. 1bn device) can detect the slot 122 of UHR-ELR (e.g., as 11ax/be implementations), but the slot 122 of UHR-ELR sig-fields can fail CRC. The UHR-ELR auto-detection be a subset of UHR auto-detection.

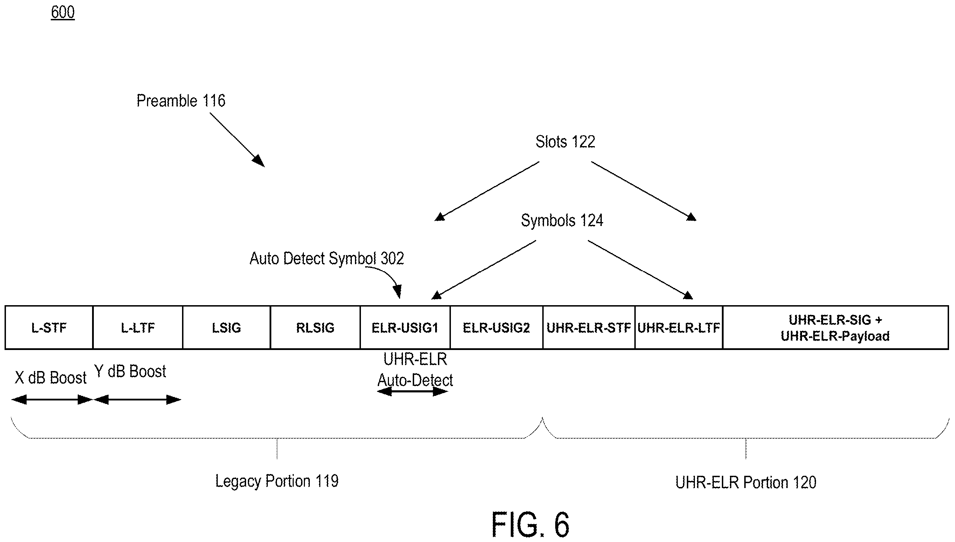

Referring to FIG. 6, depict another example of a packet format 600 in which an ELR auto detect symbol 302 can be inserted into a legacy portion 119 of the preamble 116 to notify a receiver 104 of the upcoming UHR-ELR portion of the transmission. The packet format 600 can be similar to the format 400 of FIG. 4, but with four repeated symbols 124 of UHR-ELR-SIG replaced by a slot 122 of ELR (e.g., symbol 124 of ELR-USIG1, symbol 124 of ELR-USIG2), as shown in FIG 6. As shown in example 600, the preamble 116 can include different slots 122 with symbols 124. Symbols 124A of the legacy portion 119 can include L-STF, L-LTF, LSIG, RLSIG, ELR-USIG1 and ELR-USIG2. Symbols 124B of the UHR-ELR portion 120 can include UHR-ELR-STF, UHR-ELR LTF and UHR-ELR-SIG Payload, among others. Auto detect symbol 302 can include ELR-USIG1 symbol within a slot 124A of the legacy portion 119. The auto detect symbol 302 can be separated from the first slot of the UHR-ELR portion 120 by a single intervening slot (e.g., ELR-USIG2), thereby allowing the receiver device 104 a time duration of the ELR-USIG2 to prepare or set for enhanced or improved listening or detecting of the UHR-ELR portion 120 (e.g., symbols 124B) from the start of the HER-ELR portion 120. In some examples, contents of the symbol 124 of ELR-USIG1 and the ELR-USIG2 1 may not be decoded properly. The receiver device 104 can proceed to the UHR-ELR portion 120 of the preamble 116 that can have information of the slot 122 of the SIG, such as LENGTH, BSS Color, TXOP, sta-id, RU size, CP-LTF size, Payload coding and MCS, Pre-FEC Padding and Packet extension. To allow for an 8x processing gain and 0.75 Mbps (instead of 4× processing gain and 1.5 Mbps), the symbol 124 of L-STF can be boosted by 6 dB. In some examples, the UHR-ELR portion 120 of the preamble 116 can have 8x power boost using a format 112 of RU26 instead of RU52. An L-LTF can have a X-Y dB boost without causing a bottleneck. The X - Y dB boost can be a range of values greater than 3 dB (e.g., 3-4 dB power boost, 4-6dB power boost).

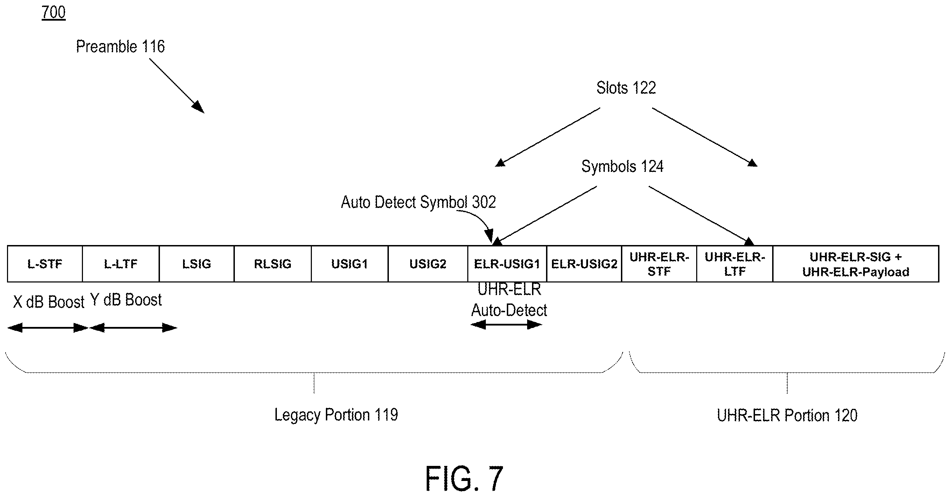

Referring to FIG. 7 depicts another example of a packet format 700 in which an ELR auto detect symbol 302 can be inserted into a legacy portion 119 of the preamble 116 to notify a receiver 104 of the upcoming UHR-ELR portion of the transmission. The packet format 700 can be similar to the format 500 of FIG. 5, but with the four repeated symbols 124 of UHR-ELR-SIG symbols 124B replaced by a slot 122 of ELR (e.g., symbol 124 of ELR-USIG1, symbol 124 of ELR-USIG2. As shown in example 700, the preamble 116 can include different slots 122 with symbols 124. Symbols 124 can include L-STF, L-LTF, LSIG, RLSIG, USIG1, USIG2, ELR-USIG1, ELR-USIG2, UHR-ELR-STF, UHR-ELR LTF, UHR-ELR-SIG Payload, among others. Similar to example 600, in the example 700 the auto detect symbol 302 can be inserted into ELR-SIG1 slot 122A, spaced apart from the start of the UHR-ELR portion 120 by a single intervening slot 122A corresponding to ELR-USIG2 symbol, which can correspond to a time interval or duration of about 2, 4, 6 or 8 ms. The symbol of 124 ELR-USIG1 can have a 90-degree phase rotation on data tones and pilot tones. Some example formats 112 can have one slot 122 of ELR-SIG with a 90-degree phase rotation instead of the symbol 124 of ELR-USIG1 and the symbol 124 of ELR-USIG2. The symbols 124 of USIG1 and USIG2 can allow for the receiver devices 104 (e.g., 11be type devices) to decode the slot 122 of USIG and countdown the UHR-ELR packet.

In some instances, a receiver device 104, such as a 11bn device, when operating at an extended long-range, can ignore the symbols 124 of USIG1 and USIG2 when the symbols of USIG1 and ISIG2 are not decoded properly by the receiver device 104. The device (e.g., 102 or 104) can continue to the next symbol 124 and can run auto-detection on that symbol 124. For example, when contents of the symbols 124 of ELR-USIG1 and ELR-USIG2 are not decoded properly, the receiver device 104 can proceed to UHR-ELR portion 120 of the preamble 116 that can include the SIG information. To allow for an 8x processing gain and 0.75 Mbps (instead of 4x processing gain and 1.5 Mbps), the symbol 124 of L-STF can be boosted by 6 dB (still below peak of payload), and UHR-ELR portion 120 of preamble 116 can have 8x power boost using a format 112 of RU26 instead of RU52. An L-LTF can have a X-Y dB boost without causing a bottleneck.

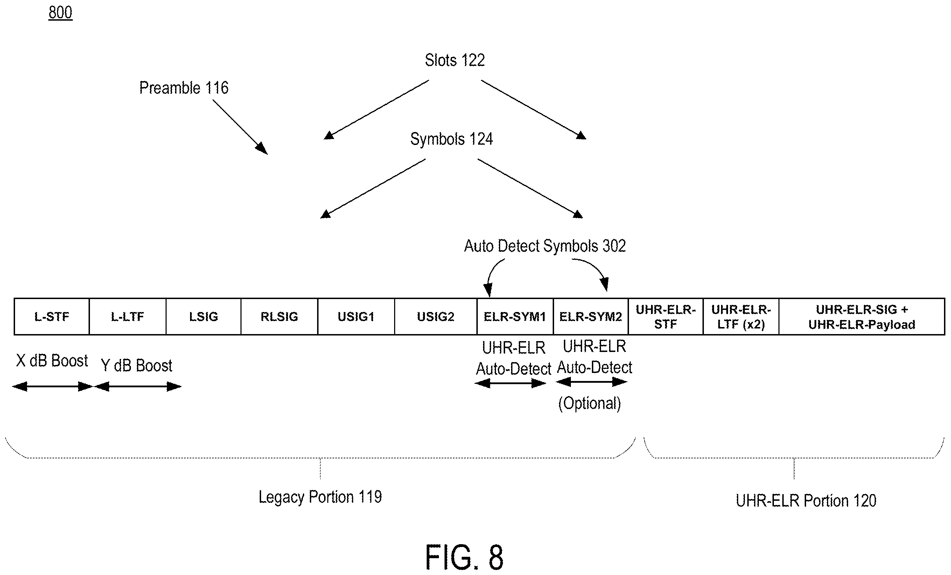

Referring to FIG. 8, depicts an example of a packet format 800 in which one or more ELR auto detect symbols 302 can be inserted into a legacy portion 119 of the preamble 116 to notify a receiver 104 of the upcoming UHR-ELR portion of the transmission. A first portion of the preamble 116, can be the same as preamble 116 (e.g., 11be preamble) in packet format 700, except for a X-Y dB power boost for the symbol 124 of the L-STF and a X-Y dB power boost for the symbol of the L-LTF. Since PAPR of the symbols 124 (e.g., L-STF and L-LTF) can be under 4 dB in 20 MHz, X-Y dB power increase cannot cause any OOB leakage compared to payload with > 10 dB PAPR. A short packet of 2 payload symbols can result in power increase of 0.7 to 1.5 dB at the sender device 102, but power increase can be negligible for longer packets. Auto detect symbols 302 can be included in the slots 122A of the legacy portion 119 and can correspond to or include any one or any combination of symbols indicative of ELR transmission, such as the ELR-Sig, ELR-SYM1 and ELR-SYM2 symbols. Symbols to identify the frame or the preamble as the ELR transmission can include any of the ELR-Sig or ELR-SYM symbols, which can be used interchangeably herein, depending on the design or implementation. After the symbols 124 of USIG1 and USIG2, two 4 msec symbols 124 of ELR-SYM1 and ELR-SYM2. Contents of these symbols can be either same as the symbols 124 of USIG1 and USIG2, or same as the symbol 124 of L-LTF (without the power boost), or any other known pattern repeated over two symbols. The symbols 124 of USIG1 and USIG2 can allow for a third-party receiver device 104 (e.g., 11bn, 1 The device) that can receive the preamble 116 to decode the slot 122 of the USIG and countdown the UHR-ELR packet. The symbol 124 of ELR-SYM1 can include a 90 degree, or an arbitrary, phase rotation on data (e.g., pilot) tones to reduce probability of false detection. The symbols 124 of ELR-SYM2 can have the same 90 degree, or arbitrary phase, rotation.

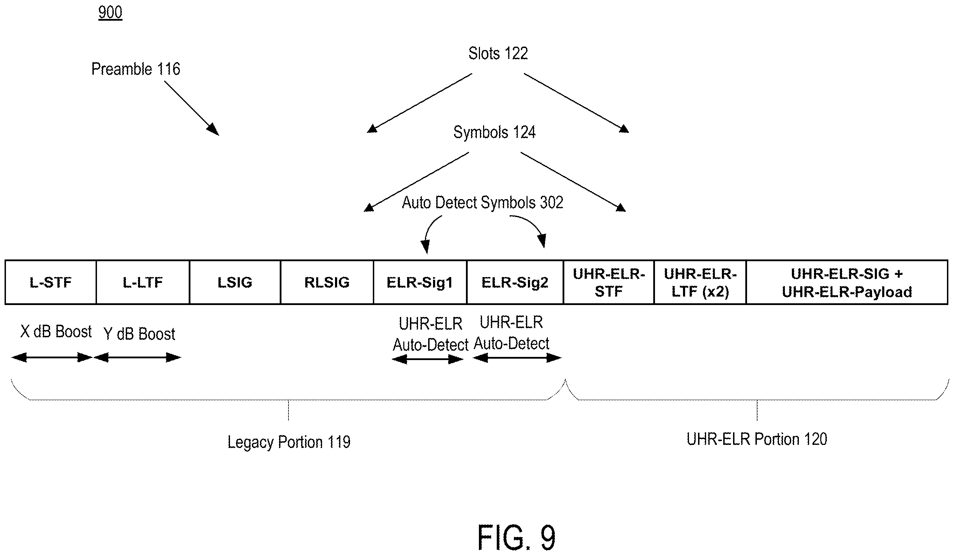

Referring to FIG. 9, depicts an example of packet 900, in which one or more ELR auto detect symbols 302 can be inserted into a legacy portion 119 of the preamble 116 to notify a receiver 104 of the upcoming UHR-ELR portion of the transmission. A first portion of the preamble 116 can be same or similar as preamble 116 in packet format 800. The packet format 900 can include an amount of dB power boost for the symbol 124 of L-STF and a another same or a different amount of power boost for the symbol 124 of L-LTF. The two power boost amounts can be any values or amounts of decibels, such as at least a 2, 3, 4, 5, 6, 7, 8 or more than 8 dB power boost. Auto detect symbols 302 can be inserted into slots 122A of the legacy portion 119 corresponding to symbols ELR-Sig1 and ELR-Sig2. For instance, the packet format 900 can replace the symbols 124 of USIG1 and USIG2 with a known pattern for the symbols 124 of ELR-Sig1 and ELR-Sig2. The symbols 124 of ELR-Sig1 and ELR-Sig can have a 90 degree, 180 degree, or arbitrary phase rotation. Using the ELR-Sig1 and ELR-Sig2 can allow for the receiver device 104 to auto detect the preamble 116.

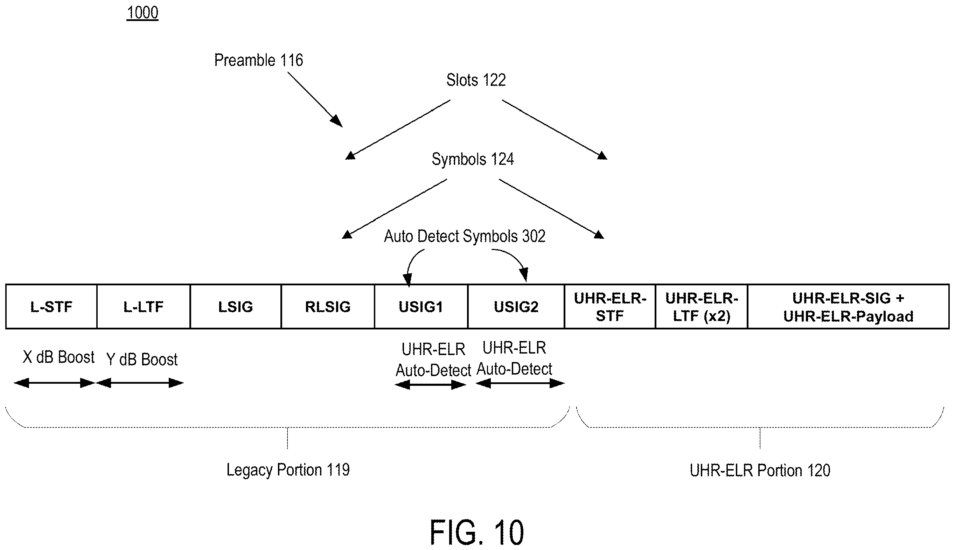

Referring to FIG. 10 depicts an example of packet 1000, in which one or more ELR auto detect symbols 302 can be inserted into a legacy portion 119 of the preamble 116 to notify a receiver 104 of the upcoming UHR-ELR portion of the transmission. A first portion of the preamble 116 can be the same as the preamble in packet format 800. The packet format 1000 can include an amount of dB power boost for the symbol 124 of L-STF and another amount of dB power boost for the symbol 124 of L-LTF. The two power boost amounts can be, for example, at least a 2, 3, 4 or 6 dB. The auto detect symbols 320 can be inserted into slots 122A of the legacy portion 119. For instance, the symbols 124 of the USIG1 and USIG2 can include fixed content as the a-priori (e.g., previously exchanged) known pattern for auto detection by the receiver device 104. The auto detect symbols 302 can be located or inserted in one or two slots 122A immediately preceding the start of the UHR-ELR portion 120 (e.g., slot 122B with the symbol UHR-ELR-STF symbol in it). The symbol 124 of USIG1 can include USIG content dependent on a version of the receiver device 104 (e.g., 802. 11be standard). The symbol 124 of USIG1 can include one or more reserved bits to match one or more patterns of the version. A TXOP field of the symbol 124 of the USIG1 can be a fixed values (e.g., 127 as an undetermined TXOP duration). The symbol 124 of USIG1 can include a plurality of fields such as version identifier (e.g., 11bn identifier), bandwidth (e.g., 20 MHz), UL/DL (e.g., according to receiver device and sender device), and BSS color. Contents of the symbol 124 of the USIG2 can include a similar pattern to the contents of the symbol 124 of the USIG1, except with 4-8 CRC bits and 6 tail bits. Using this configuration, the symbols 124 of USIG1 and USIG2 can reduce the probability of a false alarm.

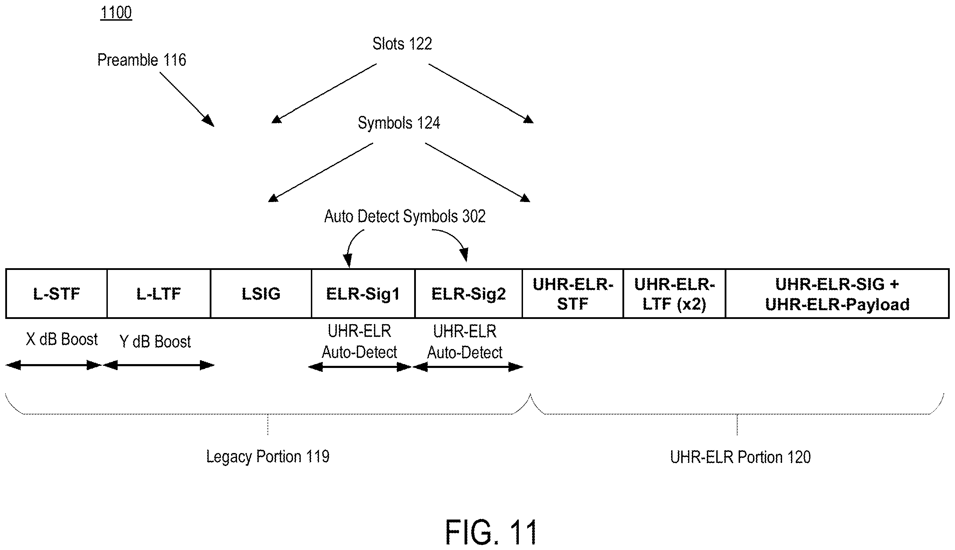

Referring to FIG. 11 depicts an example of packet 1100 in which one or more ELR auto detect symbols 302 can be inserted into a legacy portion 119 of the preamble 116 to notify a receiver 104 of the upcoming UHR-ELR portion of the transmission. A first portion of the preamble 116 can be the same as the preamble in packet format 800. The packet format 1100 can include an amount of dB power boost for the symbol 124 of L-STF and another amount of dB power boost for the symbol 124 of L-LTF. The two amounts of power boost can be same or different and can include at least a 2, 3, 4, 6 or more than 6 dB power boost. Auto detect symbols 302 can be inserted into slots 122A of the legacy portion 119 corresponding to ELR-Sig1 and ELR-Sig2 symbols. In packet 1100, the sender device 102 can transmit the symbols 124 of ELR-Sig1 and ELR-Sig2 instead of the symbol 124 of RLSIG and the next symbol. The sender device 102 can transmit the symbols 124 of ELR-Sig1 and ELR-Sig2 can include a 90 degree, 180 degree, or an arbitrary phase rotation. The receiver device 104 can auto-detect the packet 1100 at the same time as format detection. For example, the receiver device 104 can auto detect the packet at the same time as an 11ax, 11be, or 11bn detection. The receiver device 104 can detect the packet 1100 as 11a/g or 11n (e.g., when the symbols 124 of ELR-Sig1 and ELR-Sig2 include a 90 degree rotation). The receiver device 104 can drop the packet 1100 after decoding the symbol 124 of HT-SIG when the packet air supply 110 is classified as 11n.

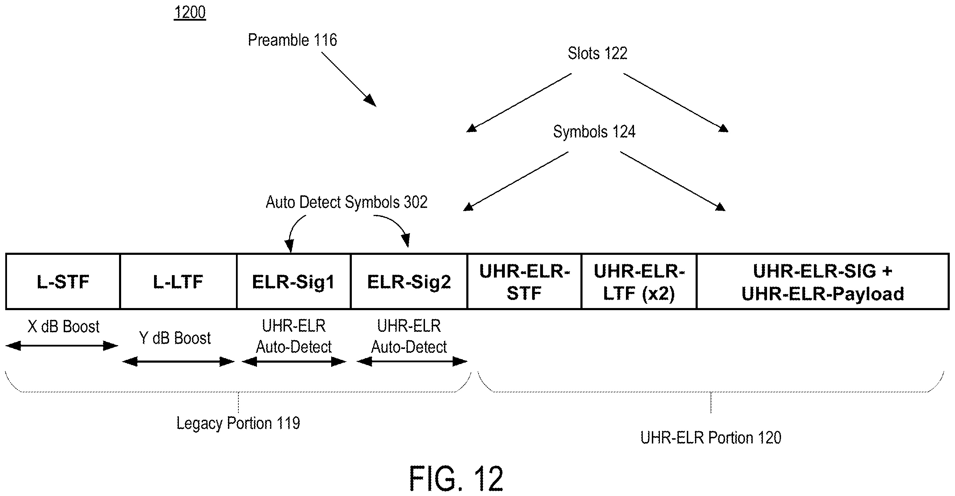

Referring to FIG. 12 an example of packet 1200 in which one or more ELR auto detect symbols 302 can be inserted into a legacy portion 119 of the preamble 116 to notify a receiver 104 of the upcoming UHR-ELR portion of the transmission. A first portion of the preamble 116 can be the same as the preamble in packet format 800. The packet format 1200 can include an amount of dB power boost for the symbol 124 of L-STF and another amount of power boost for the symbol 124 of L-LTF. The two amounts of power boost can be same or different and can include at least a 2-6 dB power boost. Auto detect symbols 302 can be inserted into slots 122A of the legacy portion 119 corresponding to ELR-Sig1 and ELR-Sig2 symbols In packet 1200, the sender device 102 can transmit the symbols 124 of ELR-Sig1 and ELR-Sig2 instead of the symbols 124 of RLSIG and LSIG. The sender device can transmit the symbols 124 of ELR-Sig1 and ELR-Sig2 can include a 90 degree, 180 degree, or an arbitrary phase rotation.

In the event that the slot 122 of ELR-SIG is the same as the slot 122 of USIG symbols, a rotation check can occur without prior knowledge of transmitted BPSK symbols. In the event that the slot 122 of ELR-SIG symbols replicas are the same as the symbol 124 of L-LTF, or any known pattern, transmitted symbols 124 to the receive device 104 can be known and a rotation check can be done after equalization of the preamble 116.

After the slot 122 of the ELR-SYM, the UHR-ELR portion 120 of the packet including an optional 4 msec symbol 124 of UHR-ELR-STF, two symbols 124 of UHR-ELR LTF, and a payload of the preamble 116 (e.g., UHR-ELR payload). The symbol 124 of the UHR-ELR-LTF and the payload (e.g., UHR-ELR payload) can follow format 112(e.g., 11bn)).

The UHR-ELR portion 120 of preamble 116 after the ELR-SYM symbol(s) can have a power boost using some format 112 of RU52 or RU26 for 6 or 9 dB power boost respectively. The symbol 124 of the UHR-ELR LTF can be repeated twice to allow for channel smoothing in very low SNR, the symbol 124 of UHR-ELR-STF can allow for simpler physical implementation.

In the event that the slot 122 of the ELR-SIG symbols replicas can be the same as the slot 122 of the USIG, a rotation check can occur without prior knowledge of transmitted BPSK symbols. Otherwise, transmitted symbols to the receiver device 104 can be known and a rotation check can be done after equalization.

After the slot 122 of ELR-SYM, the UHR-ELR portion 120 of the packet can include an optional 4 msec symbol 124 of UHR-ELR-STF, two symbols 124 of UHR-ELR LTF and a payload of the preamble 116 (e.g., UHR-ELR payload). The symbol 124 of the UHR-ELR-LTF and the payload (e.g., UHR-ELR payload) can follow regular 11bn format 112.

UHR-ELR portion 120 of preamble 116 after the slot 122 of the ELR-SYM can have a power boost using some format 112 of RU52 or RU26 for 6 or 9 dB power boost respectively. The symbol 124 of UHR-ELR LTF can repeat twice to allow for channel smoothing in very low SNR, the symbol 124 of UHR-ELR-STF can allow for simpler physical implementation.

If the sender device 102 or the receiver device 104 (e.g.,11bn) cannot detected over the preamble 116, there can be two detection examples before an ELR rotation check. In a first example, the symbol 124 of the LSIG parity check passes and the symbols 124 of the LSIG and RLSIG repetition check fails. The failure can result in false packet (e.g.,11a/g) detection, but as the false packet is processed, concurrently, a rotation check for the subsequent symbols 124 after the symbol 124 or LSIG occurs. In some examples, a MAC can consider UHR-ELR declaration after an incorrect MAC header. A probability of the symbol 124 of LSIG LENGTH being shorter than four-five symbols 124 can be small in the event that 6 Mbps, 9 Mbps, 12 Mbps, and 18 Mbps can be considered for very low RSSI. In a second example the symbols 124 of LSIG and RLSIG repetition check passes and LSIG and RLSIG parity check passes but the LENGTH can indicate the sender device (e.g., 11ax, 11be). The receiver device 104 can execute the rotation check after the symbols 124 of HE-SIGA. Aversion identifier can be set such that the slot 122 of USIGA or USIGB0 can be 0.

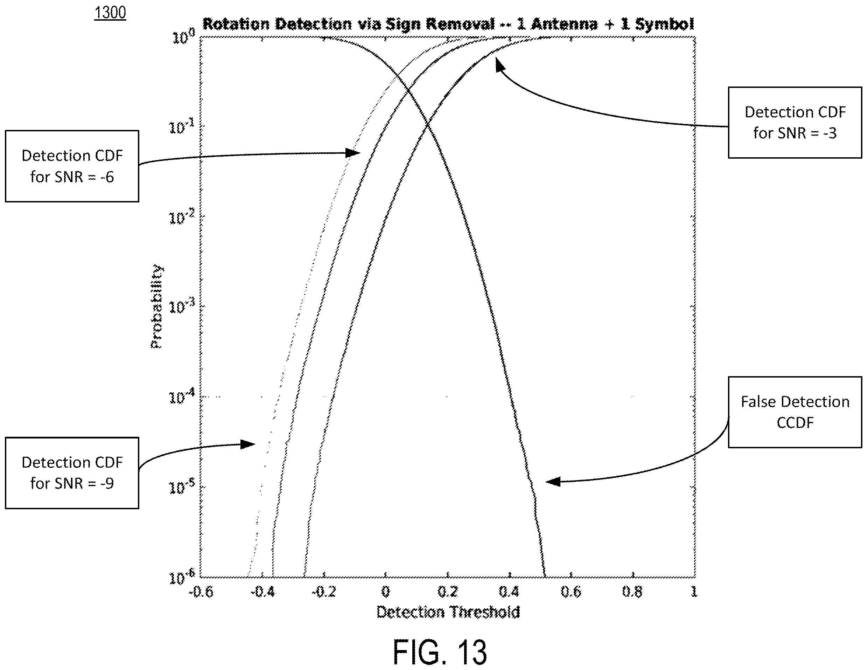

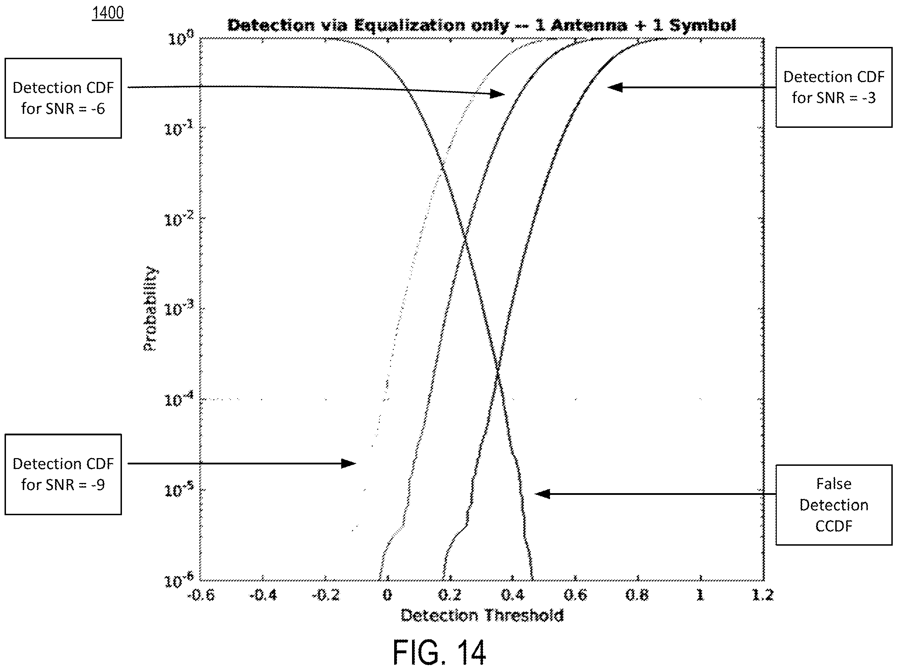

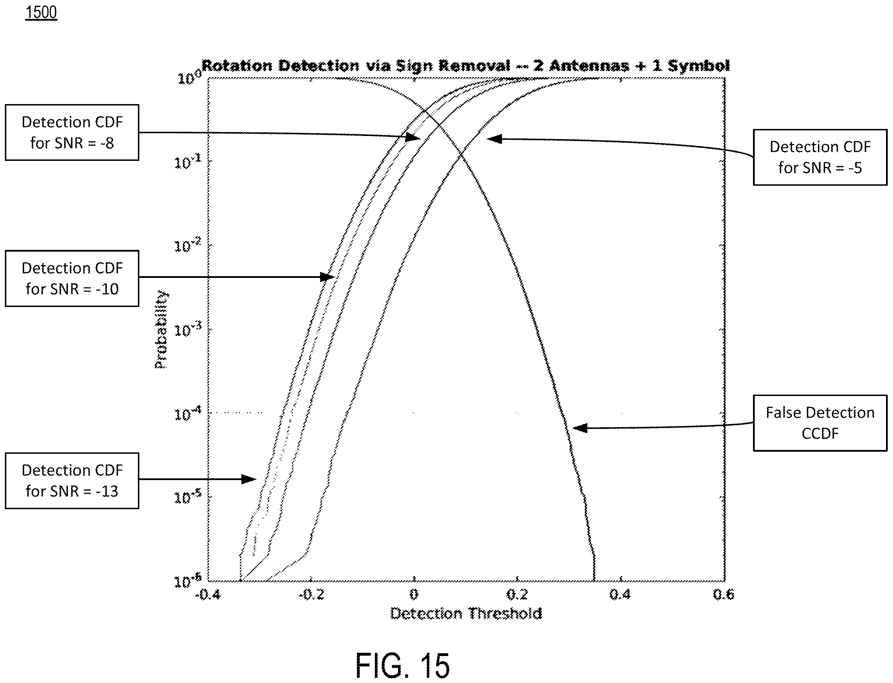

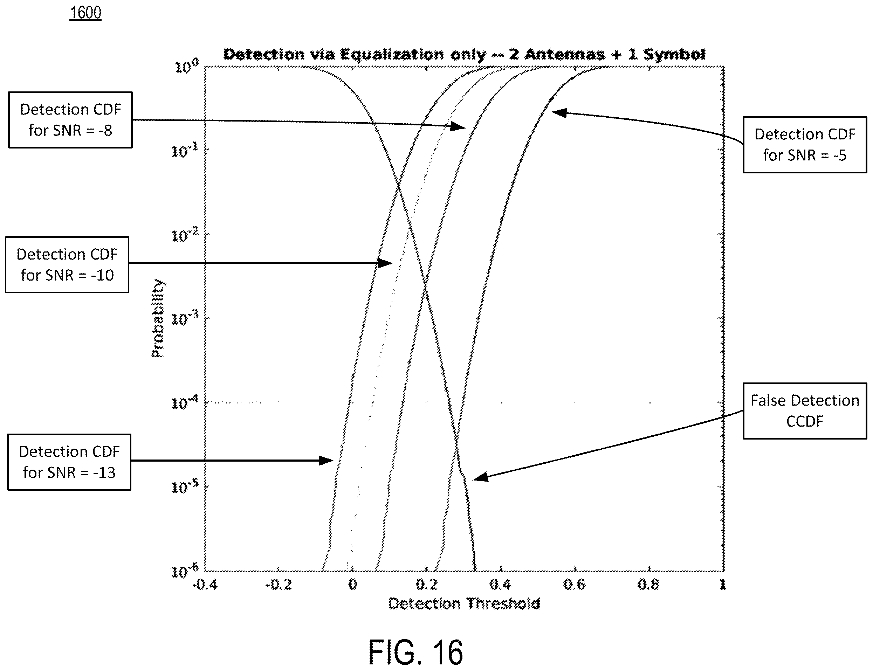

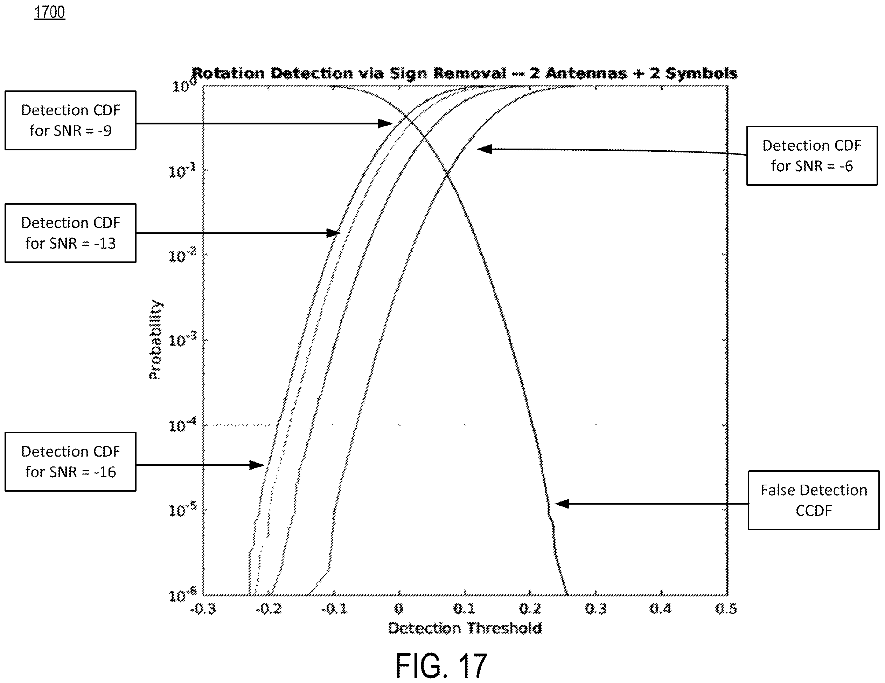

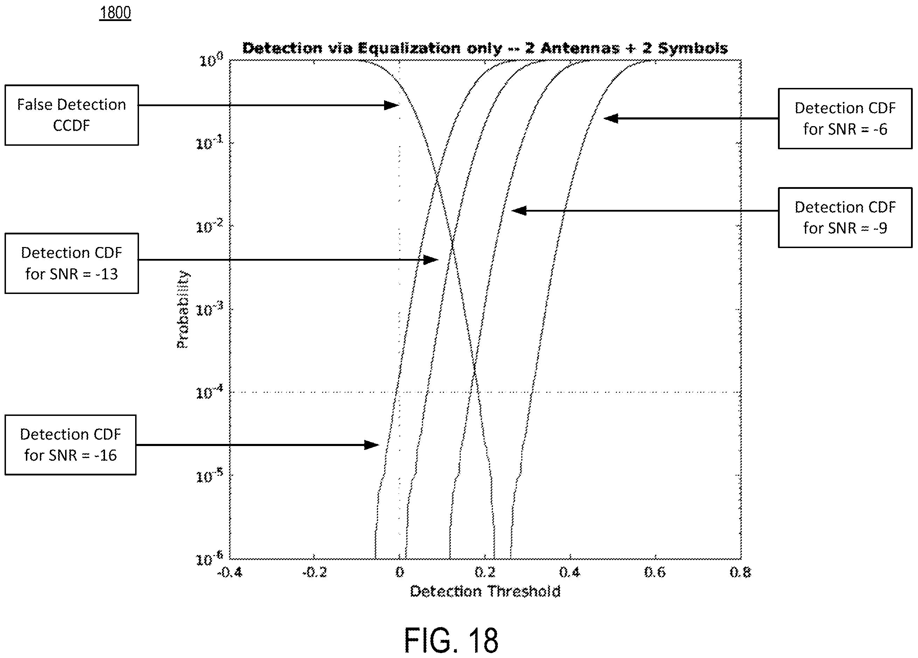

Referring now to FIGs. 13-18 are plots 1300-1800 of simulation results of the various examples (e.g., 300, 400, 500, 600, 700 in accordance with the technical solutions. The plots show CDF plots for rotation check in AWGN can be based on unknown transmitted USIG data or known transmitted L-LTF sequence, using equalization, with CFO = 16 KHz. The technical solutions can include that Req. SNR for RU242 and MCS 0 over 1 stream can be approximately - 1 dB for a low density parity check (LDPC) and ~ +1 dB for body-coupled-communication (BCC) per receiver device 104 antenna.

For unknown USIG data, 1 antenna and one 4-µsec symbol, can achieve less than 10% detection miss with SNR of -6 dB and less than 1 0% false alarm with SNR of -3 dB. For example, 2 antennas and one 4-µsec symbol, can achieve less than 10% detection miss with SNR of -8 dB and less than 10% false alarm with SNR of -5 dB. In another example, 2 antennas and two 4-µsec symbols, can achieve less than 10% detection miss with SNR of -9 dB and less than 1 0% false alarm with SNR of -6 dB.

For known L-LTF sequence, 1 antenna and one 4-µsec symbol, can achieve less than 10% detection miss and false alarm with SNR of -9 dB. For example, 2 antennas and one 4-µsec symbol, can achieve less than 10% detection miss and false alarm with SNR of -12 dB. In another example, 2 antennas and 2 4-µsec symbols, can achieve less than 10% detection miss and false alarm with SNR of -15 dB. Using the systems and methods described herein, the detection misses and false alarms can be reduced.

Simulation results for 2x2 AWGN can include Req. SNR for 10% PER for MCS0 over RU52 over 1 stream with 2 receiver device 104 antennas using LDPC: ~-10 dB. Simulation results for 2x2 AWGN can include Req. SNR for 10% detection probability of L-STF with |CFO| less than 16 KHz with 2 receiver device 104 antennas achieve a +3 dB boost at approximately 8.5 dB and achieve a +6 dB boost at approximately 11.5 dB. Simulation results for 2x2 AWGN can include Req. SNR for 10% detection probability of L-LTF with |CFO| less than 16 KHz with 2 receiver device 104 antennas achieve a +3 dB boost at approximately 9 dB and achieve a +6 dB boost at approximately 12 dB.

In this manner, the systems and methods described herein can achieve at least +6 dB improvement and can use +5 dB boost for L-STF and L-LTF, while using L-LTF or known pattern (with no boost) for ELR-SYM symbols.

Simulation results for the receiver device 104 (e.g., 2x4 11nD) can include Req. SNR for 10% PER for MCS0 over RU52 over 1 stream with 4 receiver device 104 antennas using LDPC: ∼-10.5 dB Simulation results for 2×4 11nD can include Req. SNR for 10% detection probability of L-STF with |CFO| less than 16 KHz with 2 receiver device 104 antennas achieve a +3 dB boost at approximately 11 dB and achieve a +6 dB boost at approximately 14 dB. Simulation results for 2x4 11nD can include Req. SNR for 10% detection probability of L-LTF with |CFO| less than 16 KHz with 2 receiver device 104 antennas achieve a +3 dB boost at approximately 11.5 dB and achieve a +6 dB boost at approximately 14.5 dB.

In this manner, the systems and methods described herein can achieve at least +6 (+8) dB improvement, can use +3 (+5) dB boost for the symbols 124 of L-STF and L-LTF, while using the symbol 124 of the L-LTF or known pattern, without a boost, for the symbols 124 ELR-SYM.

In addition, the simulation results can include Req. SNR for 10% probability of LSIG and RLSIG repetition detection with 2 receiver device 104 antennas: ~-8 dB. The simulation results can include Req. SNR for 10% probability of R-BPSK rotation detection over sig-fields without a-priori knowledge of the contents with 2 receiver device 104 antennas: ~-9 dB.

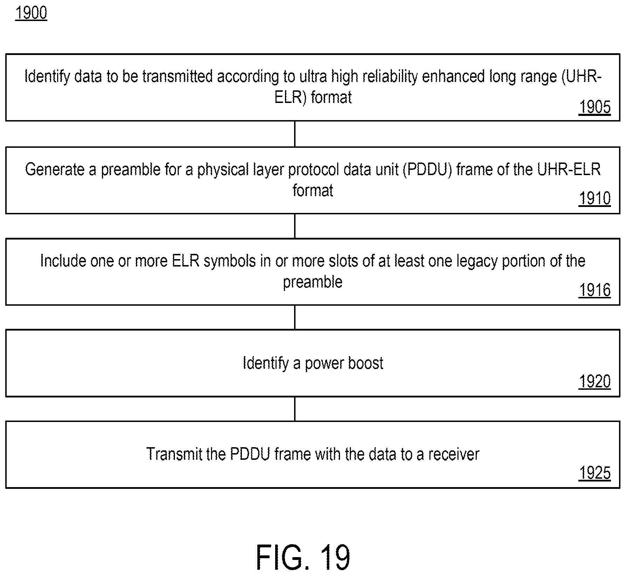

FIG. 19 illustrates an example flow diagram of a method 1900 for processing and communicating packet formats for UHR-ELR communications. For example, example method 1900 can be implemented using example system 100 or any features or techniques discussed in connection with FIGs. 3-12. For instance, method 1900 can be implemented using example system 100 deployed in connection with a WLAN access point device or any other computing device that can operate in accordance with 802.11 wireless standard (e.g., 802.11bn) and examples 300-1200.

At step or operation 1905, a sender device can identify data according to ultra-high reliability enhanced long range (UHR-ELR) format, such as any combination of examples of format in examples 300-1200 of FIGs. 3-12. At step or operation 1910, the sender device can generate a preamble for a physical layer protocol data unit (PDDU) frame of the UHR-ELR format implementing an 802.11 wireless standard. At step or operation 1915, the sender device can include one or more ELR in or more slots of at least one legacy portion of the preamble. At step or operation 1920, the sender device can identify a power boost to provide during transmission of one of a legacy-short term training field (L-STF) or a legacy-long term training field (L-LTF) of the legacy portion of the preamble. At step or operation 1925, the sender device can transmit the PDDU frame with the data to a receiver device in accordance with any of the aspects of the technical solutions described herein.

At operation 1905, the method can identify data to be transmitted according to UHR-ELR format. For instance, the sender device can identify any type and form of data to be transmitted to the receiver device according to an ultra-high reliability enhanced long-range (UHR-ELR) format. The data can include or correspond to end-user inputs, sensor data, command and control data, system or firmware updates, application data, application logic, event based triggers, or any other type of data that can be transmitted via a frame. For example, a computing device (i.e., sender device) can execute an event, such as a data transmission, instruction or command update, telemetry and status update or any other event that can result in data being generated. The initiation of the event can cause the computing device to identify data associated with the event.

The system can determine that the generated data is to be transmitted to the receiver device according to UHR-ELR format. For example, the computing device can determine that the data corresponds to a remote receiver device that communicates with the computing device using UHR-ELR communication. In response to this determination, the computing device can identify that the data is to be transmitted according to the UHR-ELR format. The sender device can determine that the data corresponds to a UHR-ELR session, or a connection based on a destination device identifier (e.g., IP address, MAC address, a link identifier or any other data that can be used to identify a connection, session or the receiver device).

At operation 1910, the method can generate a preamble for a PPDU frame for UHR-ELR format. For instance, the sender device can generate a preamble for a physical layer protocol data unit (PDDU) frame of the UHR-ELR format for a wireless communication, such as a WLAN communication implementing an 802.11 wireless standard. The PPDU can include data used for transmission to the receiver device. The PPDU frame can include the preamble, a header, a payload, a trailer, among others. The PPDU frame can be 90 degrees rotated, or rotated by an arbitrary phase, with respect to a symbol in at least one of the first plurality of slots or the second plurality of slots to reduce false detection. By maximizing, the PPDU frame, a more robust payload and robust preamble can lower the link budget asymmetry between downlink (DL) and uplink (UL), by about any amount, such as up to 2dB, 4dB, 6 dB or more than 6dB.

The preamble can include a sequence or a segment, read by the receiver device prior to the arrival of the data transmission. For instance, the preamble can include a plurality of slots for a UHR-ELR portion and a plurality of slots for a legacy portion. The legacy portion of the preamble can allow backwards compatibility between the sender device and the receiver device. For example, in the event that the receiver device implements a previous standard, the sender device can include an indication for the previous standard to allow the receiver device to receive the data.

The UHR-ELR portion can include a plurality of slots and a plurality of symbols. Each of the slots can correspond to a time interval or a type of duration designated for that slot. Both receiver and sender can be informed of the order of the slots and the time intervals of each slot. The UHR-ELR portion can configure the receiver device to receive the data in accordance with the UHR-ELR format. For example, when the reliever device receives the preamble, the receiver device can use a system processer to extract the UHR-ELR portion and configure the receiver device in accordance with the UHR-ELR format. The receiver can identify the UHR-ELR portion (e.g., UHR-ELR symbols from designated UHR-ELR slots in the preamble) based on time intervals of all the symbols between the first symbol of the preamble that is power boosted and detected by the receiver as the start of the transmission and the predetermined slots for the UHR-ELR symbols. For instance, the receiver can know that the UHR-ELR format is identified by the fourth slot following the first power boosted slot of the preamble. For instance, the receiver can detect the power boosted slot one at the start of the preamble and can count the time intervals of each of the slots to identify the portion of the incoming signal corresponding to the UHR-ELR slot to identify any presence of the UHR-ELR symbol in the time interval of the UHR-ELR slot.

The UHR-ELR portion of the preamble can include a synchronization symbol to facilitate synchronization between the sender and receiver. The synchronization symbol can include, for example, a power boosted first symbol of the preamble. The receiver can recognize the symbol based on the change in the power of the transmitted signal (e.g., impulse) at the start of the transmission, or by detecting that the signal to noise ratio has decreased for a particular symbol (e.g., L-STF, or together L-STF and L-LTF when two first symbols or slots are power boosted). The UHR-ELR portion of the preamble can include redundant information for receiver to use for at least one of demodulation or error correction of the PPDU frame. By using the UHR-ELR portion of the preamble described herein, the sender device can generate a robust preamble and reduce the computing resource consumed by the receiver device.

At operation 1915, the method can include one or more ELR symbols in the preamble. For instance, the sender device can include one or more ELR symbols in or more slots of the legacy portion of the preamble. The sender can include the ELR symbols in designated portions of the preamble, such as a set slot that is a particular time interval apart from the power boosted start of the frame (e.g., L-STF frame, or both of the L-STF and L-LTF frames). The one or more ELR symbols can include one or more symbols known by the sender device and the receiver device to indicate that the PPDU frame is in accordance with the UHR-ELR format. For example, the symbols can include at least one of ELR-USIG1, and ELR-USIG2. Each of the symbols can be known to the receiver device and the sender device.

For instance, the preamble generator can insert an auto detect symbol or signal into a legacy portion of the preamble to indicate an incoming arrival of the UHR-ELR portion of the preamble a set interval time following the reading or receipt of the auto detect symbol. The preamble generator can generate the preamble that includes a legacy portion of the preamble that is followed by the UHR-ELR portion of the preamble. The legacy portion can include legacy slots for legacy symbols and the UHR-ELR portion can include ELR slots for ELR symbols. The preamble generator can insert into the legacy slot of the legacy portion an auto detect symbol (e.g., an ELR symbol) to signal, indicate or alert the receiver device that the incoming frame or preamble is going to include an EHR-ULR portion following the legacy portion of the preamble. The preamble generator can insert the auto detect symbol into any slot of the legacy portion of the preamble. For instance, the auto detect symbol can be inserted into the last slot of the legacy portion (e.g., immediately preceding the first slot of the UHR-ELR portion), or any slot that is one, two, three, four, five, six or any number of slots apart from the start of the UHR-ELR portion. Each slot can include a designated time duration or interval associated with the transmission of that slot, thereby allowing the preamble generator and the receiver to coordinate the time duration between the auto detect symbol and any slot of the UHR-ELR portion.

The one of the one or more ELR symbols can include a symbol that is same as a symbol in the L-LTF. The one of the one or more ELR symbols can include a symbol that is same as a symbol in at least one of a universal signal field one (USIG1) or a universal signal field two (USIG2) of the legacy portion of the preamble. The one or more ELR symbols can be configured to convey to the receiver control information. The control information indicative of at least one of a modulation parameter or a transmission mode. In this manner, the one or more ELR symbols include a plurality of symbols to reduce link budget asymmetry when in the configurations described in FIGs. 3-12, during interactions between the sender device and receiver device.

At operation 1920, the method can include identifying a power boost for a portion of the preamble. For instance, the sender device can identify a power boost to provide during transmission of one of a legacy-short term training field (L-STF) or a legacy-long term training field (L-LTF) of the legacy portion of the preamble. For example, the sender can identify the power boost in the preamble by increasing the transmission power during the portion of the transmission time interval for which a designated power boosted slots or symbols are being transmitted. For example, if L-STF and L-LTF slots are power boosted to indicate the start of the incoming preamble, the sender device can increase the power transmission signal for the duration of transmission pertaining to L-STF and L-LTF symbols of the preamble and transmit the remainder of the preamble at the standard (e.g., lower) power level. This power boost or power increase can indicate to the receiver device the location or timing of the incoming preamble (e.g., start of the preamble), as well as allowing the receiver device to read the two symbols more clearly.

The power boost can indicate to the receiver to detect the one or more ELR symbols at a predetermined time after receiving of the at least one of the L-STF or the L-LTF by the receiver. By detecting the one or more ELR symbols at a predetermined time, the receiver device can avoid wasting computing resources associated with detection at incorrect intervals. Instead, responsive to detecting a start of the transmission of the new preamble (e.g., responsive to the power boost), the receiver can tune in and focus on reading the portion of the transmission pertaining to ELR symbols or slots that are at a set and predetermined time interval following the power boosted portion of the transmission. The power boost can be applied to the L-STF and L-LTF of the legacy portion of the preamble, or any other symbols in the preamble discussed herein as they can be selected for this purpose. The power boost can be adjusted based on channel conditions to improve reception at the receiver.

To identify the power boost, the sender device 102 can include a plurality of sensors to monitor the environment or end-user behavior to anticipate when to apply the power boost. For example, in harsh electromagnetic environments, a system processor of the send device can determine to apply the power boost to one or more symbols of the preamble. The receiver device can transmit a signal to the sender device to indicate a "need" for the power boost on the subsequent data transmission. For example, the receiver device may transmit a signal to the sender device indicating that the subsequent message can include a power boost for improved signal strength.

At operation 1925, the method can include transmitting of the PPDU frame with the preamble and the data. For instance, the sender device can transmit the PDDU frame with the data to the receiver device. The receiver device can be configured to detect, using the one or more ELR symbols of the preamble, that the PPDU frame is in accordance with the UHR-ELR format. The sender device can provide the power boost to the at least one of the L-STF or the L-LTF of the legacy portion of the preamble during transmission. The sender device can be configured to identify a start of an incoming preamble responsive to a detected power boost in the transmission or in response to a detected power boost combined with a particular symbol (e.g., L-STF). By providing the power boost to the at least one of the L-STF or the L-LTF (e.g., or any other symbol or slot) of the legacy portion of the preamble during transmission, the reception at the receiver device can be approved.

The receiver can be configured to identify a time interval between the start of the incoming preamble (e.g., power boosted L-STF) and a start of the time duration for the ELR slot within which ELR symbol is being monitored. For example, responsive to the ELR symbol being detected within the time duration for the ELR symbol, the receiver can determine that the incoming preamble and frames are for UHR-ELR format or processing. For example, responsive to the ELR symbol not being detected within the time duration of the ELR symbol, the receiver can determine that the incoming preamble and the frames are not for the UHR-ELR format or processing.

Upon reception of the preamble, the receiver device can use receiver circuitry to extract the symbols, the slots, the legacy portion, and the UHR-ELR portion from the preamble. The system processor can use the extracted symbols, to adjust the configuration of the receiver device to receive the subsequent data transmission from the sender device. The robust preamble can reduce the link budget asymmetry between the sender device and the receiver device using the aspects of the technical solutions described herein.

References to "or" can be construed as inclusive so that any terms described using "or" can indicate any of a single, more than one, and all of the described terms. References to at least one of a conjunctive list of terms can be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, that can operate within a system or environment. It should be understood that the systems described above can provide multiple ones of any or each of those components and these components can be provided on either a standalone machine or on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use examples thereof, those of ordinary skill will understand and appreciate the existence of variations, combinations, and equivalents of the specific example, method, and examples herein. The present methods and systems should therefore not be limited by the above-described examples, methods, and examples, but by all examples and methods within the scope and spirit of the disclosure.

## Claims

1. A method, comprising:
identifying, by a sender, data to be transmitted wirelessly to a receiver according to an ultra-high reliability enhanced long-range (UHR-ELR) format;
generating, by the sender, a preamble for a physical layer protocol data unit (PPDU) frame of the UHR-ELR format, the preamble comprising a first plurality of slots for a legacy portion of the preamble and a second plurality of slots for the UHR-ELR portion of the preamble;
including, by the sender, one or more ELR symbols in one or more slots of the legacy portion of the preamble, the one or more ELR symbols used by a receiver to auto-detect that the PPDU frame is in accordance with the UHR-ELR format;
identifying, by the sender, a power boost to provide during transmission of at least one of a legacy-short term training field (L-STF) or a legacy-long term training field (L-LTF) of the legacy portion of the preamble; and
transmitting, by the sender, the PPDU frame with the data to the receiver, the sender providing the power boost to the at least one of the L-STF or the L-LTF of the legacy portion of the preamble during transmission.

2. The method of claim 1, wherein the receiver is further configured to detect using the one or more ELR symbols of the preamble that the PPDU frame is in accordance with the UHR-ELR format.

3. The method of any preceding claim, wherein the one of the one or more ELR symbols comprises one or more symbols known by the sender and the receiver to indicate that the PPDU frame is in accordance with the UHR-ELR format.

4. The method of any preceding claim, wherein the one of the one or more ELR symbols includes a symbol that is same as a symbol in the L-LTF.

5. The method of any preceding claim, wherein the one of the one or more ELR symbols includes a symbol that is same as a symbol in at least one of a universal signal field one (USIG1) or a universal signal field two (USIG2) of the legacy portion of the preamble.

6. The method of any preceding claim, wherein the data of the PPDU frame is 90 degree, or an arbitrary phase, rotated with respect to a symbol in at least one of the first plurality of slots or the second plurality of slots to reduce false detection.

7. The method of any preceding claim, wherein the power boost is configured to indicate to the receiver to detect the one or more ELR symbols at a predetermined time after receiving of the at least one of the L-STF or the L-LTF by the receiver.

8. The method of any preceding claim, wherein the ELR symbol is located within a slot of the first plurality of slots of the legacy portion, the slot corresponding to a time interval from a first slot of the second plurality of slots of the UHR-ELR portion of the preamble, and wherein the receiver is configured to detect the UHR-ELR portion at the time interval following the detection of the ELR symbol.

9. The method of any preceding claim, wherein one or more ELR symbols are inserted in the at least one or more slots of the legacy portion of the preamble following one of a first set of symbols comprising: L-STF, L-LTF, LSIG, RLSIG, USIG1 and USIG2 or a second set of symbols comprising: L-STF, L-LTF, LSIG and RLSIG.

10. The method of any preceding claim, wherein the power boost applied to the L-STF and L-LTF of the legacy portion of the preamble is adjusted based on channel conditions to improve reception at the receiver, and/or wherein the one or more ELR symbols are configured to convey to the receiver control information, the control information indicative of at least one of a modulation parameter or a transmission mode.

11. A system, comprising:
a sender device configured to:
identify data to be transmitted wirelessly to a receiver device via a physical layer protocol data unit (PPDU) frame of an ultra-high reliability enhanced long-range (UHR-ELR) format;
generate a preamble of the PPDU frame, the preamble configured to include at least one of a legacy short term training field (L-STF) or a legacy long term training field (L-LTF);
insert one or more ELR symbols into one or more slots of the preamble between the at least one of the L-STF or the L-LTF and a payload portion of the PPDU frame configured to include the data; and
transmit, to the receiver device, the PPDU frame using a power boost to transmit the at least one of the L-STF or the L-LTF of the preamble of the PPDU frame.

12. The system of claim 11, wherein the receiver device is further configured to detect using the one or more ELR symbols of the preamble that the PPDU frame is in accordance with the UHR-ELR format.

13. The system of claim 11 or 12, wherein the one or more ELR symbols comprises one or more symbols known by the sender device and the receiver device to indicate that the PPDU frame is in accordance with the UHR-ELR format.

14. The system of any preceding claim 11 to 13, wherein the one of the one or more ELR symbols includes a symbol that is same as at least one of a symbol in the L-LTF, a symbol in a universal signal field one (USIG1) or a symbol in a universal signal field two (USIG2) of the preamble.

15. A device comprising:
one or more processors, coupled to memory and configured to:
identify data to be transmitted wirelessly to a receiver according to an ultra-high reliability enhanced long-range (UHR-ELR) format;
generate a preamble for a physical layer protocol data unit (PPDU) frame of the UHR-ELR format, the preamble comprising a first plurality of slots for a legacy portion of the preamble and a second plurality of slots for the UHR-ELR portion of the preamble;
provide one or more ELR symbols in a selected one or more slots of the first plurality of slots or the second plurality slots, the one or more ELR symbols used by a receiver to auto-detect that the PPDU frame is in accordance with the UHR-ELR format;
identify a power boost to provide during transmission of at least one of a legacy-short term training field (L-STF) or a legacy-long term training field (L-LTF) of the legacy portion of the preamble; and
transmit the PPDU frame with the data to the receiver, the sender providing the power boost to the at least one of the L-STF or the L-LTF of the legacy portion of the preamble during transmission.
